# EUROPÄISCHE PATENTSCHRIFT

(11) **EP 2 590 014 B1**
(45) Veröffentlichungstag und Bekanntmachung des Hinweises auf die Patenterteilung: **22.03.2017**
(21) Anmeldenummer: 12198803.4
(22) Anmeldetag: 31.05.2011
(51) Int. Cl.: G03B 11/04, G03B 17/04, B60R 11/04, B60R 11/00, G03B 29/00

(54) **Vorrichtung als Montagegruppe für eine Kameraeinheit an einem Kraftfahrzeug**
Device as a mounting group for a camera unit on a motor vehicle
Dispositif en tant que groupe de montage pour une caméra à une véhicule automobile

(30) Priorität: 11.06.2010 US 354151 P
(43) Veröffentlichungstag der Anmeldung: 08.05.2013
(62) Teilanmeldung aus: 11723056.5
(73) Patentinhaber: Huf Hülsbeck & Fürst GmbH & Co. KG, 42551 Velbert (DE)
(72) Erfinder: Scudder, Austen Kolar, Verona, WI 53593 (US); Walters, Alex Scott, Butler, WI 53007-1404 (US); Fichert, Ulrike, 42113 Wuppertal (DE); Bartlett, Shannon Christian, Cedarburg, WI 53012 (US); Jungmann, Richard Heinz, Richfield, WI 53076 (US)
(74) Vertreter: Vogel, Andreas

(56) Entgegenhaltungen:
- EP-A1- 1 003 068
- DE-A1-102009 008 283
- DE-U1-202005 017 430
- US-A1- 2006 256 459

## Beschreibung

Die Erfindung betrifft eine Vorrichtung als Montagegruppe mit einer Kameraeinheit, die zur Bilderfassung des Außenbereiches eines Kraftfahrzeuges dient, und einem Deckelelement, das über einen Antrieb von einer Schließstellung in eine Offenstellung bewegbar ist, wobei in der Schließstellung des Deckelelementes die Kameraeinheit von außen unzugänglich sich hinter dem Deckelelement befindet und in der Offenstellung des Deckelelementes die Bilderfassung durchführbar ist. Ferner betrifft die Erfindung ein Verfahren zur Befestigung derselben Vorrichtung.

Ein Kamerasystem für ein Kraftfahrzeug, dessen Elemente in einer Montagegruppe vormontiert sind, ist beispielsweise in US2006/0256459A gezeigt. In der EP 1 003 068 B1 ist eine Kameraeinheit zur Bilderfassung des Außenbereiches eines Kraftfahrzeuges beschrieben. Hierbei ist ein Deckelelement vorgesehen, welches von einer Schließstellung in einer Offenstellung und umgekehrt über einen Antrieb bewegt werden kann. Nachteiligerweise hat sich gezeigt, dass ein derartiger Verschlussmechanismus für die Bewegung des Deckelelements in seine jeweilige Stellung platzaufwendig ist. Ferner hat sich gezeigt, dass der Montageaufwand einer derartigen Vorrichtung mit einer Kameraeinheit für den Monteur hoch ist.

Die Aufgabe der Erfindung ist es, ein Montageverfahren für eine Vorrichtung mit Kameraeinheit zu schaffen, bei dem möglichst mit geringem Aufwand die Vorrichtung mit Kameraeinheit am Kraftfahrzeug befestigbar ist. Eine weitere Aufgabe dieser Erfindung ist es, eine platzsparende und kompakte Vorrichtung der genannten Art zu schaffen.

Die Aufgabe wird durch sämtliche Merkmale des Patentanspruches 1 gelöst. In den abhängigen Ansprüchen 2 bis 13 sind mögliche Ausführungsformen der erfindungsgemäßen Vorrichtung beschrieben.

Erfindungsgemäß ist vorgesehen, dass die Vorrichtung als Montagegruppe ausgeführt ist, die an einem Karosserieteil eines Kraftfahrzeuges befestigbar ist und ein Montageelement aufweist, an dem folgende Elemente getragen sind: eine Kameraeinheit, die zur Bilderfassung des Außenbereiches eines Kraftfahrzeuges dient, ein Antrieb, der mit einem Deckelelement in Wirkverbindung steht, wobei das Deckelelement durch den Antrieb zwischen einer Schließstellung und einer Offenstellung bewegbar ist, wobei in der Schließstellung des Deckelelementes die Kameraeinheit von außen unzugänglich sich hinter dem Deckelelement befindet und in der Offenstellung des Deckelelementes die Bilderfassung durchführbar ist, und das Montageelement zumindest ein Befestigungsmittel aufweist, womit das Montageelement außenseitig am Karosserieteil des Kraftfahrzeuges befestigbar ist. Die Vorrichtung als Montagegruppe ist derart vorkonfektioniert, dass alle wesentlichen Elemente, wie Kameraeinheit, Antrieb einschließlich Deckelelement, an der Montagegruppe bereits befestigt sind. Zudem weist das Montageelement das entsprechende Befestigungsmittel auf, um die Montagegruppe außenseitig am Karosserieteil des Kraftfahrzeuges zu befestigen. Hierfür weist vorteilhafterweise das Karosserieteil entsprechende Gegenbefestigungsmittel auf, die mit dem Befestigungsmittel des Montageelementes zusammenwirken.

Die Aufgabe wird ferner durch das Verfahren mit sämtlichen Merkmalen des Anspruches 12 gelöst. In den abhängigen Ansprüchen 13 bis 23 sind mögliche Ausführungsformen beschrieben.

Erfindungsgemäß ist vorgesehen, dass das Verfahren zur Befestigung einer Vorrichtung an einem Karosserieteil eines Kraftfahrzeugs ein Montageelement vorsieht, an dem folgende Elemente getragen werden: eine Kameraeinheit, die zur Bilderfassung des Außenbereiches eines Kraftfahrzeuges dient, ein Antrieb, der mit einem Deckelelement in Wirkverbindung steht, wobei das Deckelelement durch den Antrieb zwischen einer Schließstellung und einer Offenstellung bewegbar ist, wobei in der Schließstellung des Deckelelementes die Kameraeinheit von außen unzugänglich sich hinter dem Deckelelement befindet und in der Offenstellung des Deckelelementes die Bilderfassung durchführbar ist, und das Montageelement zumindest ein Befestigungsmittel aufweist, womit die Vorrichtung von Außen an dem Karosserieteil des Kraftfahrzeuges befestigt wird. Der besondere Vorteil dieses Verfahrens zur Befestigung der erfindungsgemäßen Vorrichtung ist, dass der Monteur lediglich das Montageelement von Außen an das jeweilige Karosserieteil des Kraftfahrzeuges befestigen kann, ohne weitere Montageschritte vornehmen zu müssen, die innenseitig des Kraftfahrzeuges auszuführen sind. Zusammenfassend lässt sich hierbei herausstellen, dass lediglich ein Verfahrensschritt zur Befestigung der erfindungsgemäßen Vorrichtung notwendig ist, nämlich das Aufsetzen des Montageelementes an das Karosserieteil des Kraftfahrzeugs, wobei gleichzeitig die Befestigungsmittel am Montageelement dafür sorgen, dass die erfindungsgemäße Vorrichtung mit ihrer Kameraeinheit zuverlässig am Karosserieteil gehalten wird. Das Montageelement kann mit sämtlichen Elementen, wie Kameraeinheit, Antrieb einschließlich Deckelelement vorkonfektioniert sein, so dass der Werker lediglich an der definierten Stelle am Kraftfahrzeug das vorkonfektionierte Montageelement befestigen muss. Selbstverständlich ist es denkbar, dass eine vollautomatische Befestigung des vorkonfektionierten Montageelementes am Karosserieteil des Kraftfahrzeuges durchgeführt wird, beispielsweise über einen Roboter oder über eine ähnlich arbeitende Maschine.

Erfindungsgemäß ist ferner vorgesehen, dass das Deckelelement eine der Kameraeinheit abgewandte Außenfläche aufweist und der Antrieb mit einem derartigen Mechanismus zusammenwirkt, dass während der Bewegung des Deckelelements zwischen der Schließstellung und der Offenstellung die Außenfläche in jeder Stellung des Deckelelementes stets sich im Außenbereich des Kraftfahrzeuges befindet. Da die Außenfläche des Deckelelementes während seiner Bewegung in die jeweilige Stellung stets sich außerhalb der Kraftfahrzeugkarosserie im Außenbereich des Kraftfahrzeuges verbleibt und nicht wie im Stand der Technik in die Kraftfahrzeugkarosserie hinein verschwenkt wird, kann eine sehr kompakte und platzsparende Vorrichtung geschaffen werden. Der Antrieb mit dem Mechanismus zur Bewegung des Deckelelementes benötigt wenig Platz und wenig Bauraum innerhalb des Kraftfahrzeuges. Besonders vorteilhaft kann sein, eine derartige Vorrichtung im hinteren Bereich von Pickups-Kraftfahrzeugen einzusetzen, die speziell nur wenig Bauraum zur Montage einer derartigen Vorrichtung bieten. Selbstverständlich ist eine derartige erfindungsgemäße Vorrichtung in sämtliche Kraftfahrzeuge einsetzbar. Ein weiterer Vorteil dieser Erfindung ist, dass die Außenfläche des Deckelelementes eine Beschriftung, insbesondere ein Emblem, eine Marke, eine Zeichnung aufweisen kann, die in jeder Stellung des Deckelelementes stets sichtbar für eine Person ist, die sich im Außenbereich des Kraftfahrzeuges befindet. Hierdurch kann eine Werbewirkung über das Deckelelement erhöht werden.

Ferner kann vorgesehen sein, dass eine Vorrichtung mit einem Montageelement und einer Abdeckung vorgesehen ist, die gemeinsam ein Gehäuse, insbesondere für eine Kameraeinheit und/oder ein Betätigungselement, bilden, wobei innerhalb des Gehäuses zumindest ein Bauteil, insbesondere ein Bestandteil eines Antriebes angeordnet ist, wobei eine Lagerung des Bauteils einerseits in dem Montageelement und andererseits in der Abdeckung erfolgt. Bei diesem Bauteil kann es sich um ein bewegliches oder drehbares Bauteil handeln oder um ein unbewegliches bzw. starres Bauteil handeln, was innerhalb des Gehäuses angeordnet ist. Diese Bauteile bilden insbesondere ein Bestandteil eines Antriebes, der z. B. für ein Deckelelement der Kameraeinheit benötigt wird. Der Zusammenbau der erfindungsgemäßen Vorrichtung erfolgt dadurch, dass die Bauteile in ihrer Lagerung im Montageelement gelegt werden und anschließend eine ortsfeste Fixierung der Bauteile durch das Zusammenfügen des Montageelementes mit der Abdeckung ohne einen zusätzlichen Schritt erfolgt. Hierfür sind ebenfalls in der Abdeckung, genauso wie in dem Montageelement, ein Teil der Lagerung für die in Rede stehenden Bauteile vorgesehen. Somit können auf zusätzliche Halte- oder Befestigungselemente innerhalb des Gehäuses verzichtet werden, um die Bauteile ortsfest im Gehäuse anzuordnen. Folglich ist ein einfacher und ggf. werkzeugloser Zusammenbau der Vorrichtung mit ihren Bauteilen möglich. Hierbei kann insbesondere auf ein Montagewerkzeug verzichtet werden, da die Bauteile nur von Hand in die jeweils dafür vorgesehenen Lagerungen im Montageelement eingelegt werden brauchen.

In einer möglichen Ausführungsform der Erfindung kann der Mechanismus zumindest eine Führungskontur und zumindest einen Schwenkarm aufweisen, wobei das Deckelelement rückseitig an der Führungskontur und am Schwenkarm befestigt ist, wobei insbesondere das Deckelelement rückseitig ein erstes Verbindungselement und/oder ein zweites Verbindungselement aufweist, wobei zumindest ein Verbindungselement bewegbar gelagert an der Führungskontur und/oder dem Schwenkarm ist.

Erfindungsgemäß ist vorgesehen, dass der Mechanismus derart ausgestaltet ist, dass während der Bewegung des Deckelelementes von der Schließstellung in die Offenstellung in einer ersten Bewegungsphase das Deckelelement vom Fahrzeug sich entfernt und gleichzeitig sich um mindestens eine Achse verschwenkt und in einer zweiten Bewegungsphase das Deckelelement zum Fahrzeug herangezogen wird und insbesondere gleichzeitig sich um zumindest eine Achse zurückverschwenkt. Hierbei ist es denkbar, dass die erste und die zweite Bewegungsphase sich zurück überlappen. Die beiden Bewegungsphasen können auch sequentiell zueinander erfolgen. In der Schließstellung befindet sich das Deckelelement unmittelbar an der Fahrzeugkarosserie des Kraftfahrzeuges. Vorteilhafterweise kann das Deckelelement rückseitig die Karosserie des Kraftfahrzeuges in seiner Schließstellung kontaktieren. Rückseitig des Deckelelementes ist zumindest eine Dichtung denkbar, die in der Schließstellung des Deckelelementes die Fahrzeugkarosserie kontaktiert. Somit kann die Kameraeinheit sowie der Antrieb mit seinem Mechanismus wirksam vor Feuchtigkeit, Staub, Schmutz etc. geschützt werden. Vorteilhafterweise ist der Schwenkarm an einer ersten Achse am Deckelelement, insbesondere am ersten Verbindungselement des Deckelelements, angelenkt. Ebenfalls kann vorgesehen sein, dass eine zweite Achse vorgesehen ist, um die das Deckelelement, insbesondere das zweite Verbindungselement des Deckelelementes sich verschwenken kann, während der Antrieb zur Bewegung des Deckelelementes aktiviert ist. Hierbei verfährt die zweite Achse entlang der Führungskontur, wobei das zweite Verbindungselement zum einen entlang der Führungskontur verfahren wird und zum anderen eine Schwenkbewegung um die zweite Achse des Deckelelementes erfolgt.

Erfindungsgemäß kann vorgesehen sein, dass die Führungskontur linearförmig und/oder zumindest bereichsweise bogenförmig ist. Zweckmäßigerweise kann die linear verlaufende Führungskontur einen Winkel β zur Außenkarosserie des Kraftfahrzeuges aufweisen, an der die Vorrichtung angebracht ist, wobei der Winkel β zwischen 1° ≤ β ≤ 45°, insbesondere zwischen 10° ≤ β ≤ 35° liegt. Durch die besondere Ausgestaltung des Winkels β kann eine kompakte Gesamtanordnung der Vorrichtung geschaffen werden, wobei gleichzeitig der Schwenkbereich des Deckelelementes zwischen seiner Schließstellung und der Offenstellung möglichst dicht an der Karosserie des Kraftfahrzeuges verbleibt. Die zweite Achse, um die sich das Deckelelement während seiner Bewegung verschwenkt, kann gleichzeitig entlang der linearen Führungskontur sich verfahren. Besonders vorteilhaft in einer möglichen Ausführungsform der Erfindung ist, dass sowohl in der Schließstellung als auch in der Offenstellung die Außenfläche des Deckelelements im Wesentlichen vertikal zur Fahrzeugkarosserie ausgerichtet ist. Hierbei kann die Außenfläche des Deckelelementes diverse Konturen aufweisen. Denkbar ist beispielsweise, dass die Außenfläche im Wesentlichen parallel zur Karosserieoberfläche ausgerichtet ist. Ebenfalls ist es denkbar, dass die Außenfläche gewölbt ausgeführt ist. Ein besonderer Vorteil der Erfindung ist, dass in beiden Stellungen des Deckelelementes der im Außenbereich des Kraftfahrzeuges sich befindende Benutzer oder Person stets die Außenfläche des Deckelelementes erkennen und betrachten kann. Üblicherweise dient diese Außenfläche als Werbeträger, Informationsträger etc.

Eine weitere die Erfindung verbessernde Maßnahme kann sein, dass der Schwenkarm an einer ersten Welle angeordnet ist, die über einen Elektromotor antreibbar ist, insbesondere der Schwenkarm mit der ersten Welle ein gemeinsames Bauteil bilden. Zudem ist es denkbar, dass der Schwenkarm L-förmig ausgeführt ist. Eine Verzahnung zwischen dem Motor und dem Deckelelement kann durch ein Schneckengetriebe gebildet werden, welches selbsthemmend ausgestaltet ist.

Besonders vorteilhaft kann sein, dass ein Montageelement vorgesehen ist, das rückseitig mehrere Befestigungsbereiche aufweist, an denen die Kameraeinheit und der Antrieb, insbesondere der Elektromotor und die Welle angeordnet sind. Zudem ist es in einer weiteren möglichen Ausgestaltung der Erfindung denkbar, dass die Befestigungsbereiche und/oder die Führungskontur einstückig mit dem Montageelement verbunden sind, insbesondere das Montageelement mit den Befestigungsbereichen und/oder der Führungskontur ein gemeinsames Bauteil bilden.

An dem Montageelement sind vorzugsweise sämtliche Bauteile vorkonfektioniert, dass bedeutet, dass die Kameraeinheit, der Antrieb mit seinem Mechanismus sowie Deckelelement am Montageelement angebracht und/oder mit integriert sind. Gleichzeitig weist das Montageelement zumindest ein Befestigungsmittel auf, das zur Befestigung an der Karosserie des Fahrzeuges dient. Der Monteur muss lediglich von Außen das vorkonfektionierte Montageelement an der Karosserie befestigen. Die wesentlichen Elemente der erfindungsgemäßen Vorrichtung, wie Kameraeinheit, Antrieb mit Mechanismus sowie die elektrischen Anschlüsse hierzu werden durch eine entsprechende Öffnung an der Kraftfahrzeugkarosserie hindurch geführt, wobei gleichzeitig die Befestigungsmittel des Montageelementes für eine zuverlässige Fixierung außenseitig an der Kraftfahrzeugkarosserie sorgen.

Ebenfalls kann eine Positionserfassung vorgesehen sein, die zumindest die Schließstellung und die Offenstellung des Deckelelements erkennt, wobei entsprechend der Schließstellung und die Offenstellung der Elektromotor aktiviert und/oder deaktiviert wird. Die Positionserfassung kann mechanisch, elektronisch und/oder über eine Software gesteuert/geregelt werden. In einer möglichen Ausführungsform der Erfindung kann die Positionserfassung zumindest einen Geber aufweisen, dessen Position von einem Sensor oder einem Schalter erkannt wird, wobei insbesondere der Geber an der ersten Welle angeordnet ist. Der Sensor kann beispielsweise ein passiver oder aktiver Sensor sein. Der Sensor kann beispielsweise ein berührungslos arbeitender Sensor sein oder ein Berührungssensor sein. Der Sensor kann ein Piezoelement aufweisen oder als Hallsensor ausgeführt sein. Alternativ kann ein Schalter vorgesehen sein, der mit dem Geber entsprechend in Wirkverbindung steht. Der Geber kann beispielsweise über die Bewegung des Deckelelementes eine Positionsveränderung vornehmen, die durch den Schalter erkannt wird, bzw. der Schalter entsprechend kontaktiert wird. Der Geber kann beispielsweise an der ersten Welle vorgesehen sein. Ebenfalls ist es denkbar, dass der Geber am Deckelelement, insbesondere am ersten und/oder am zweiten Verbindungselement, vorgesehen ist.

In einer bevorzugten Ausführungsform der Erfindung können zwei Geber angeordnet sein, deren Position von jeweils einem Sensor oder einem Schalter erkannt wird. Der erste Geber dient dazu, die Offenstellung des Deckelelementes der Positionserfassung "mitzuteilen". Der zweite Geber hat die Aufgabe, die Schließstellung der Positionserfassung "mitzuteilen". Hat der Sensor bzw. Schalter die entsprechenden Informationen vom Geber erhalten, erfolgt eine Deaktivierung des Elektromotors, so dass das Deckelelement ruhend in der Offenstellung und/oder der Schließstellung verbleibt.

Ebenfalls kann vorgesehen sein, dass die Positionserfassung eine Steuereinheit umfasst, die zeitlich den Antrieb für die Öffnungsbewegung und Schließbewegung des Deckelelementes ansteuert und/oder über die Stromaufnahme des Motors erkennt, wann die Offenstellung und die Schließstellung erreicht sind. Die Steuereinheit kann beispielsweise über eine entsprechende Software die Öffnungsbewegung und die Schließbewegung ansteuern sowie eine Deaktivierung des Motors bei Erreichen der Offenstellung bzw. der Schließstellung des Deckelelementes auslösen. Hierbei ist es denkbar, dass über die Stromaufnahme des Motors die Software sowie die Steuereinheit erkennt, wann die Offenstellung und die Schließstellung erreicht sind. Die Steuereinheit kann in der Montagegruppe integriert sein. Ebenfalls ist es möglich, dass die Steuereinheit sich außerhalb der Montagegruppe, beispielsweise im Kraftfahrzeug, befindet.

Ebenfalls kann vorgesehen sein, dass die erste Welle ein erstes Verzahnungselement aufweist, das auf ein zweites Verzahnungselement einer zweiten Welle wirkt, wobei die zweite Welle im Wesentlichen parallel zur ersten Welle verläuft. Die parallele Anordnung der ersten zur zweiten Welle begünstigt eine kompakte platzsparende Gesamtanordnung. Ferner bewirken die beiden Wellen, dass eine zuverlässige Kraftübertragung vom Motor auf das Deckelelement ausgeübt wird. Die genannten Verzahnungselemente sind derart ausgestaltet, dass ein entsprechendes Übersetzungsverhältnis innerhalb des Antriebes bereitgestellt wird, damit der elektrische Motor eine entsprechende Kraft auf das Deckelelement ausüben kann, damit dieses seine jeweilige Stellung erreicht. Die Anordnung der genannten Verzahnungselemente begünstigt, dass ein einfacher und kostengünstiger Elektromotor zum Einsatz kommen kann, der insbesondere eine hohe Motordrehzahl hat. Über die Verwendung von zwei Wellen sowie den entsprechenden Verzahnungselementen, die aufeinander wirken, kann eine derartige Übersetzung geschaffen werden, die ein hohes Drehmoment entstehen lässt, welches auf das Deckelelement wirkt. Hierbei kann vorteilhaft ausgeführt sein, dass die zweite Welle ein drittes Verzahnungselement aufweist, das mit einem vierten Verzahnungselement, insbesondere mit einem Spindelelement oder Schneckenelement zusammenwirkt, das durch den Elektromotor angetrieben wird. Diese vier Verzahnungselemente begünstigen ebenfalls, dass ein hohes Drehmoment auf das Deckelelement ausgeübt wird, wenn der Elektromotor aktiviert ist.

Weiterhin kann vorgesehen sein, dass die Befestigungsbereiche gleichzeitig als Lagerung der ersten und/oder der zweiten Welle ausgebildet sind. Darüber hinaus kann wesentlich sein, dass eine Abdeckung rückseitig am Montageelement angeordnet ist, die im Wesentlichen die Bestandteile des Antriebes und der Kameraeinheit abdeckt und/oder abdichtet. Besonders vorteilhaft kann sein, dass die Abdeckung an ihrer dem Montageelement zugewandten Innenseite eine Kontur aufweist, die als Lagerung für zumindest ein Element des Antriebes oder der Kameraeinheit dient. Die Innenseite kann an diversen Stellen Konturen aufweisen, die als Lagerung der wesentlichen Elemente des Antriebes oder der Kameraeinheit dienen. Somit kann auf der einen Seite das Montageelement an definierten Bereichen Lagerungsoberflächen aufweisen und auf der anderen Seite kann die Abdeckung an ihrer Innenseite Konturen als Lagerungsoberflächen aufweisen, wobei im montierten Zustand der Abdeckung am Montageelement eine zuverlässige Befestigung und Halterung sowie Lagerung der wesentlichen Komponenten des Antriebes, insbesondere der ersten und/oder der zweiten Welle, des Schwenkarms, des ersten und/oder des zweiten Verbindungselementes, der ersten und der zweiten Achse, des Motors sowie seiner Motorwelle, des ersten, des zweiten, des dritten und des viertes Verzahnungselementes, der Kameraeinheit der wesentlichen Komponenten der Positionserfassung, insbesondere des Gebers, des Sensors, des Schalters geschaffen wird.

Gemäß einer bevorzugten Ausgestaltung der Erfindung ist die Kameraeinheit unbeweglich am Montageelement befestigt. Somit wird eine einfache und platzsparende Gesamtanordnung geschaffen. Die Kameraeinheit kann sowohl in der Schließstellung als auch in der Offenstellung unbeweglich und starr am Montageelement befestigt sein. Gleichzeitig ist die Kameraeinheit entsprechend zum Außenbereich des Kraftfahrzeuges ausgerichtet, insbesondere kann die Kameraeinheit in einem definierten Winkel zum Boden ausgerichtet sein.

Erfindungsgemäß kann ebenfalls die Vorrichtung derart ausgestaltet sein, dass das Montageelement eine erste und eine zweite Führungskontur aufweist, in der jeweils ein zweites Verbindungselement bewegbar gelagert ist, wobei die Kameraeinheit und der Elektromotor zwischen der ersten und der zweiten Führungskontur angeordnet sind. Ferner kann vorgesehen sein, dass zwei Schwenkarme vorgesehen sind, an denen das Deckelelement gelenkig angeordnet ist. Die Schwenkarme können an der ersten Welle voneinander beabstandet angeordnet sein. Hierbei kann das Montageelement Ausnehmungen aufweisen, in denen die Schwenkarme zumindest teilweise sich erstrecken. Diese Ausnehmungen können Bestandteil der rückseitigen Befestigungsbereiche des Montageelementes sein. Hierbei begrenzen die erste und die zweite Führungskontur die Anordnung der Kameraeinheit und des Elektromotors sowie zum größten Teil der ersten und der zweiten Welle mit ihren jeweiligen Verzahnungen. Auch die Positionserfassung kann zwischen den beiden Führungskonturen angeordnet sein. Ein Vorteil der auf zwei Seiten vorgesehenen Führungskonturen für das Deckelelement ist, dass eine zuverlässige und gradlinige sowie gleichmäßige Bewegung zwischen der Schließstellung und der Offenstellung erzielbar ist. Gleichzeitig befindet sich zwischen beiden Führungskonturen genügend Raum, um die wesentlichen Antriebselemente sowie die fest angeordnete und starr unbewegliche Kameraeinheit anzuordnen.

Eine weitere vorteilhafte Ausgestaltung der Erfindung ist, dass beim Verfahren zur Befestigung der erfindungsgemäßen Vorrichtung das Montageelement rückseitig über eine Rastverbindung verfügt, über die eine zuverlässige Befestigung am Karosserieteil bewirkt werden kann. Ohne jeglichen Aufwand kann das vorkonfektionierte Montageelement auf einfache Art und Weise außenseitig auf den definierten Bereich des Karosserieteils aufgesteckt werden. Selbstverständlich sind alternative Befestigungsarten denkbar, beispielsweise über eine form- und/oder kraft- und/oder stoffschlüssige Verbindung, beispielsweise kann über eine Schraubverbindung eine Befestigung des Montageelementes am Karosserieteil erreicht werden. Eine Klebverbindung ist ebenfalls denkbar.

Des Weiteren ist die erfindungsgemäße Vorrichtung mit einer Kameraeinheit, die zur Bilderfassung des Außenbereiches eines Kraftfahrzeuges dient, ausgestattet. Um die Kameraeinheit vor Verschmutzungen zu schützen, ist ein Deckelelement an der Vorrichtung vorgesehen, das über den Antrieb von einer Schließstellung in eine Offenstellung bewegbar ist, wobei sich in der Schließstellung des Deckelelementes die Kameraeinheit von Außen unzugänglich hinter dem Deckelelement befindet und in eine Offenstellung des Deckelelementes die Bilderfassung für die Kameraeinheit durchführbar ist. Im Sinne dieser Erfindung wird unter einem Bauteil unter anderem ein Bestandteil des Antriebes verstanden. Hierbei kann es sich um einen Motor, eine Welle, ein Zahnrad, ein Getriebe oder dergleichen handeln. Auch die Kameraeinheit und/oder das Betätigungselement wird im Sinne dieser Erfindung als Bauteil verstanden. Bei dieser Vorrichtung ist die Kameraeinheit geschützt hinter dem Deckelelement angeordnet, wobei die Kameraeinheit selbst unbeweglich oder starr an der Vorrichtung angeordnet sein kann. Auch ist es denkbar, dass die Kameraeinheit ebenfalls über einen Antrieb schwenkbar oder beweglich an der Vorrichtung angeordnet ist.

Ebenfalls ist es denkbar, dass die Vorrichtung zusätzlich zur Kameraeinheit oder optional ein Betätigungselement in Form eines Griff-/ oder Knopfelements aufweist, womit ein Schloss für ein bewegliches Teil, wie z. B. eine Klappe, Tür oder dergleichen, manuell oder elektrisch betätigbar ist. Zweckmäßigerweise kann dieses Betätigungselement ebenfalls hinter dem Deckelelement für eine Kameraeinheit vorgesehen sein. Auch ist es denkbar, dass die Vorrichtung nur das Betätigungselement ohne Kameraeinheit aufweist, wobei das Betätigungselement dann in jedem Fall hinter einem beweglichen Deckelelement, was von einem Antrieb betätigbar ist, angeordnet ist.

Ferner kann die Vorrichtung optional mit einem Annäherungssensor ausgestattet sein, der insbesondere in oder an dem Deckelelement positionierbar ist. Durch diesen Annäherungssensor ist es möglich, dass das Deckelelement angesteuert wird, wenn z. B. der Annäherungssensor ein Objekt in seiner Nähe messtechnisch erfasst. Hierdurch kann das Deckelelement von seiner Schließstellung in seiner Offenstellung bewegt werden. Dieses kann z. B. dann sinnvoll sein, wenn ein Fußgänger einen Mindestabstand zu der erfindungsgemäßen Vorrichtung unterschreitet und der Annäherungssensor ein entsprechendes Messsignal erfasst, so dass eine Bilderfassung durch die Kameraeinheit erfolgen soll. Auch kann dieses Messsignal vom Annäherungssensor dazu genutzt werden, dass z. B. das Deckelelement angehoben wird, damit das Betätigungselement für einen Bediener des Fahrzeuges erreichbar wird. In diesem Fall kann optional eine Kameraeinheit hinter dem Deckelelement angeordnet sein, die aber nicht zwingend erforderlich ist.

Ebenfalls ist es denkbar, dass eine Öffnung in dem Montageelement vorgesehen ist, durch die die Bilderfassung der Kamera durchführbar ist oder das Betätigungselement erreichbar ist, wobei die Öffnung von dem Deckelelement in der Schließstellung verschlossen ist. Damit ein Innenraum der Vorrichtung, der sich hinter dem Deckelelement befindet, vor Verschmutzung geschützt ist, kann eine Dichtung zwischen dem Deckelelement und der Vorrichtung, insbesondere dem Montageelement vorgesehen sein. Diese Dichtung kann aus einem elastischen Material, insbesondere Gummi oder Silikon bestehen oder z. B. durch eine Labyrinthdichtung gebildet werden.

Bei der erfindungsgemäßen Vorrichtung ist es ebenfalls denkbar, dass wenigstens ein im Gehäuse ruhendes Bauteil durch einen Motor, eine Kameraeinheit und/oder eine Steuereinheit oder dergleichen gebildet ist, wobei die Lagerung des ruhenden Bauteils einerseits eine Aufnahme und andererseits ein Sicherungselement aufweist. Zweckmäßigerweise ist die lagerungbildende Aufnahme für das ruhende Bauteil in dem Montageelement angeordnet, so dass das ruhende Bauteil nur in diese entsprechende Aufnahme eingelegt werden braucht. Um das ruhende Bauteil in diese Aufnahme aber unbeweglich zu fixieren bzw. zu halten, kann zumindest ein bereits erwähntes Sicherungselement vorgesehen sein, welches an der Abdeckung vorgesehen ist. Das Sicherungselement kann selbst federnd oder nachgiebig ausgestaltet sein, um Maßtoleranzen auszugleichen. Selbstverständlich ist es auch denkbar, dass ein ruhendes Bauteil durch mehrere Sicherungselemente in seiner Aufnahme gehalten ist. Zweckmäßigerweise ist die Kontur der Aufnahme der Kontur des ruhenden Bauteils angepasst, damit dieses formschlüssig in der Aufnahme angeordnet werden kann. Zusätzlich kann auch ein Fixierelement vorgesehen sein, um das Bauteil in seiner entsprechenden Aufnahme zu fixieren. Dieses Fixierelement kann aus einem Rastelement bestehen. Durch dieses zusätzliches Fixierelement kann sichergestellt werden, dass das entsprechende Bauteil nicht aus seiner Aufnahme im Montageelement herausfällt, falls diese umgedreht oder gekippt wird, wenn die Abdeckung noch nicht befestigt ist.

Ebenfalls kann es bei der erfindungsgemäßen Vorrichtung optional vorgesehen sein, dass zumindest ein bewegliches Bauteil durch eine drehbare Welle gebildet ist, die Bestandteil des Antriebs, insbesondere von einem Getriebe des Antriebes darstellt, wobei das Bauteil nur einseitig oder mehrseitig durch die Lagerung im Gehäuse aufgenommen ist. So ist es z. B. möglich, das bewegliche Bauteil nur durch eine links- oder rechtsseitige Lagerung im Gehäuse zu halten. Die üblicherweise vorgesehene Lagerung auf der anderen Seite kann durch ein anderes bewegliches Bauteil gebildet werden. So kann z. B. eine Welle mit einem Zahnrad eine Lagerung am Wellenabschnitt aufweisen und eine zweite Lagerungsmöglichkeit erfahren, in dem ein weiteres Zahnrad mit dem Zahnrad auf der Welle mechanisch zusammenwirkt. Folglich ist im herkömmlichen Sinne nur eine einseitige Lagerung des entsprechenden Bauteils (z. B. Welle mit Zahnrad) vorgesehen.

Des Weiteren ist es optional bei der erfindungsgemäßen Vorrichtung denkbar, dass zumindest eine Lagerung eines beweglichen Bauteils durch zwei Lagerhälften gebildet ist, wobei an einem Befestigungsbereich eine erste Lagerhälfte an dem Montageelement rückseitig, dass heißt an der abgewandten Seite vom Deckelelement, und/oder eine zweite Lagerhälfte an der Abdeckung innenseitig, dass heißt an der Seite der Abdeckung, die zum Montageelement hin gerichtet ist, vorgesehen ist. Bei der Lagerung des beweglichen Bauteils kann ebenfalls ein Fixierelement für das bewegliche Bauteil an dem Montageelement vorgesehen sein. Durch das Zusammenfügen des Montageelementes mit der Abdeckung, was zweckmäßigerweise dadurch erfolgt, dass die Abdeckung auf das Montageelement gesetzt wird, wird die vollständige Lagerung des beweglichen Bauteils hergestellt.

Die erste und zweite Lagerhälfte einer Lagerung für ein bewegliches Bauteil können halbkreisförmig oder halbzylinderförmig ausgestaltet sein, um hierdurch eine Welle, die das bewegliche Bauteil darstellt, optimal drehbar zu lagern. Das bewegliche Bauteil ist dann in der Lagerung formschlüssig aber drehbar gehalten. Um eine axiale Verschiebung des beweglichen Bauteils in der Lagerung zu vermeiden, ist zumindest eine Seite der Lagerung verschlossen, so dass die Lagerung insgesamt (halb-)zylinderförmig ausgestaltet ist durch die erste und zweite Lagerhälfte. Zweckmäßigerweise ist dann die der geschlossenen Seite gegenüberliegende Seite offen ausgestaltet, wodurch die Welle einseitig aus der Lagerung ragen kann. Auch ist es denkbar, dass die Lagerung links- und rechtseitig offene Seiten aufweist, wodurch jedoch das bewegliche Bauteil in Form einer Welle keine axiale Lagerung erfährt. Selbstverständlich können auch beide äußeren Seiten der Lagerung geschlossen sein, so dass das entsprechende bewegliche Bauteil sowohl links- als auch rechtsseitig axial in der Lagerung gehalten ist.

Die erste und zweite Lagerhälfte können spiegelbildlich zueinander ausgestaltet sein und einen Freiraum aufweisen, um dem Bauteil bei einer Bewegung ausreichend Platz bereitzustellen. Der Freiraum ist z. B. dann erforderlich, wenn es sich bei dem Bauteil um eine Welle mit einem Zahnrad oder einem Schwenkarm oder dergleichen handelt. Außerdem können die ersten und die zweiten Lagerhälften rippenförmig ausgestaltet sein, wobei die herausragenden Rippen die konkreten Lagerstellen für das Bauteil bilden. Auf diese Art und Weise ist eine besonders materialsparende Konstruktion der Vorrichtung möglich.

Ferner kann bei der erfindungsgemäßen Vorrichtung optional vorgesehen sein, dass ein oder alle Bauteile in die entsprechende Lagerung im Montageelement lose eingelegt werden und nur durch das Aufsetzen der Abdeckung ortsfest im Gehäuse angeordnet sind.

Ebenfalls ist es bei der erfindungsgemäßen Vorrichtung vorstellbar ist, dass zumindest eine Lagerung an dem Montageelement stegförmig aus der insbesondere eben ausgestalteten Rückseite herausragt und gleichzeitig eine Führungskontur für das bewegliche Deckelelement bildet. Somit kann eine stegförmig ausgebildete Lagerung an dem Montageelement zwei Funktionen erfüllen, in dem es zum einen ein entsprechendes Bauteil, wie z. B. eine Welle, drehbar im Gehäuse lagert und anderseits eine Führungskontur für das bewegliche Deckelelement vorsieht. Auf diese Art und Weise kann eine besonders kompakte Vorrichtung mit einem beweglichen Deckelelement erhalten werden.

Zweckmäßigerweise kann es bei der erfindungsgemäßen Vorrichtung vorgesehen sein, dass die Abdeckung an ihrer dem Montageelement zugewandten Innenseite eine Kontur aufweist, die als Lagerung für zumindest ein Element des Antriebs oder der Kameraeinheit dient. Durch die entsprechende Ausgestaltung der Kontur, die auf die Lagerung der Bauteile geometrisch abgestimmt ist, werden die Bauteile im Gehäuse ortsfest gehalten. Ebenfalls ist es denkbar, dass an der Innenseite der Abdeckung die bereits erwähnten Sicherungselemente, die z. B. stiftförmig herausragen, vorhanden sind, um die Bauteile in ihrer Aufnahme im Montageelement zu fixieren.

Um die Abdeckung an dem Montageelement zu befestigen, kann es vorgesehen sein, dass zumindest ein Halteelement vorgesehen ist. Dieses Halteelement kann stiftförmig ausgestaltet sein. Hierbei ist es denkbar, dass das stiftförmige Halteelement an dem Montageelement angeordnet ist und mit einem entsprechenden Durchbruch in der Abdeckung formschlüssig zusammenwirkt, um die Abdeckung sicher mit dem Montageelement zu befestigen. Auch ist es denkbar, dass das Halteelement aus einer Spange oder einem Rastelement besteht, um die Abdeckung und das Montageelement sicher miteinander zu verbinden. Hierbei kann das Halteelement auch so ausgestaltet sein, dass die Verbindung zwischen Abdeckung und Montageelement unlösbar oder auch lösbar ausgestaltet ist. Folglich kann das Halteelement als entsprechend ausgestaltetes Rastelement ausgestaltet sein.

Um eine gute Abdichtung der erfindungsgemäßen Vorrichtung zu erzielen, kann es vorgesehen sein, dass die Abdeckung schalenförmig mit einem umlaufenden Rand an der Innenseite ausgestaltet ist und insbesondere zumindest ein Durchbruch für elektrischen Stecker oder elektrische Leitung aufweist, die zur elektrischen Versorgung der erfindungsgemäßen Vorrichtung dient. Der erwähnte umlaufende Rand der Abdeckung kann mit einem ebenen Bereich des Montageelementes zusammenwirken oder mit einem geometrischen komplementär ausgestalteten Rand des Montageelementes zusammenwirken. Dieser Rand am Montageelement kann den umlaufenden Rand der Abdeckung umfassen oder in ihm angeordnet sein, wodurch eine einfache Labyrinthdichtung erreichbar ist. Zwischen dem umlaufenden Rand und dem Montageelement kann zusätzlich eine Dichtung vorgesehen sein, wodurch das Gehäuse aus Abdeckung und Montageelement wasserdicht verschließbar ist. Die Dichtung kann unabhängig von der Ausgestaltung der Abdeckung und Montageelement zwischen den beiden Elementen vorgesehen sein. Eine besonders einfache Konstruktion kann dadurch erreicht werden, dass das Montageelement im Dichtungsbereich eben ausgestaltet ist und mit dem umlaufenden Rand der Abdeckung zusammenwirkt. Die zuvor erwähnten Durchbrüche für einen Stecker oder eine Leitung können ebenfalls mit einem Dichtelement versehen sein. Auch kann der Stecker selbst als Abdichtung für den Durchbruch dienen.

Ebenfalls ist es denkbar, dass das Deckelelement, das Montageelement und/oder die Abdeckung aus einem Gussteil bestehen, insbesondere aus einem Spritzgussteil. Somit können das Montageelement und/oder die Abdeckung einteilig ausgestaltet sein. Als Material für das Deckelelement, Montageelement und/oder die Abdeckung kann Kunststoff oder Leichtmetall, insbesondere Aluminium, verwendet werden. Auch ist eine Ausführung der zuvor genannten Elemente in Edelstahl oder Messing denkbar.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Fig. 1: die erfindungsgemäße Vorrichtung mit einer Kameraeinheit, wobei ein Deckelelement vorgesehen ist, welches sich in einer Schließstellung befindet und somit die Kameraeinheit verdeckt,
- Fig. 2: die Vorrichtung gemäß Fig. 1, wobei das Deckelelement aus der Schließstellung in Richtung Offenstellung bewegt wird,
- Fig. 3: die Vorrichtung gemäß Fig. 1, wobei die Offenstellung des Deckelelementes erreicht ist,
- Fig. 4: eine Rückansicht der Vorrichtung gemäß Fig. 1,
- Fig. 5: eine weitere Rückansicht auf die Vorrichtung gemäß Fig. 1,
- Fig. 6: eine weitere Rückansicht gemäß der Vorrichtung gemäß Fig. 1,
- Fig. 7: die in Fig. 5 dargestellte Abdeckung in einer weiteren Ansicht und
- Fig. 8: eine weitere Detailansicht auf die Abdeckung, welche Bestandteile des Antriebes, insbesondere den Elektromotor sowie diverse Wellen, hält und lagert.

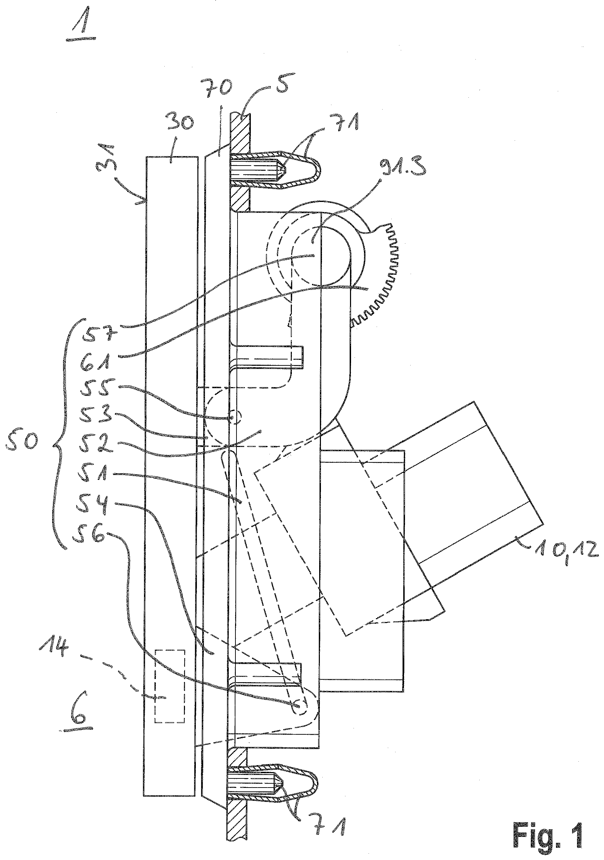

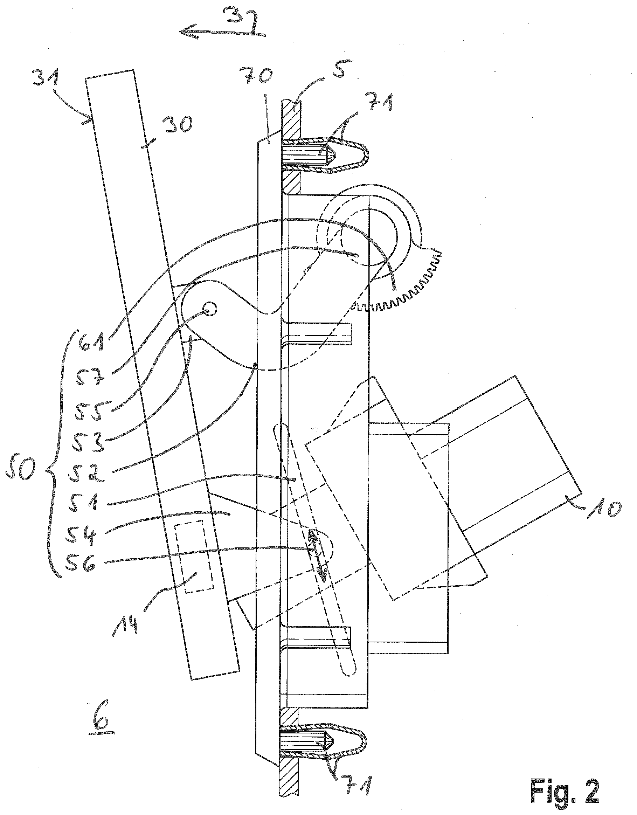

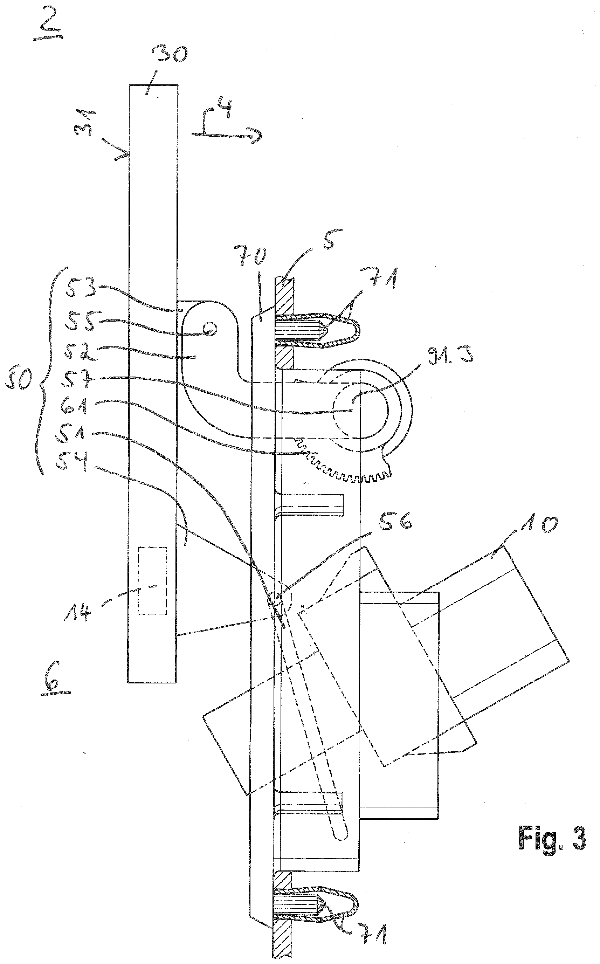

In Fig. 1 ist eine erfindungsgemäße Vorrichtung mit einer Kameraeinheit 10 dargestellt, die an einem Kraftfahrzeug befestigt ist. Die Befestigung befindet sich im oder am Heckbereich an einem Karosserieteil 5 des Kraftfahrzeuges. Die Kameraeinheit 10 dient zur Bilderfassung des Außenbereiches 6 des Kraftfahrzeuges, insbesondere wenn ein Parkvorgang des Kraftfahrzeughalters erfolgt. Es ist ein Deckelelement 30 vorgesehen, das über einen Antrieb 50 von einer Schließstellung 1, die in Fig. 1 dargestellt ist, in eine Offenstellung 2, die in Fig. 3 dargestellt ist, bewegbar ist. In der Schließstellung 1 des Deckelelements 30 befindet sich die Kameraeinheit 10 von außen unzugänglich hinter dem Deckelelement 30. Das Deckelelement 30 verschließt vollständig die Kameraeinheit 10, so dass eine Bilderfassung nicht möglich ist. Erfolgt nun über den Antrieb 50 eine Bewegung des Deckelelementes 30 in die Offenstellung 2, erfolgt eine entsprechende Schwenkbewegung des Deckelelementes 30, wobei Fig. 2 eine Zwischenstellung des Deckelelementes 30 zeigt.

In der Offenstellung 2 des Deckelelementes 30 kann eine Bilderfassung des Außenbereiches 6 des Kraftfahrzeuges durchgeführt werden. Wie in Fig. 1 bis Fig. 3 zu erkennen ist, weist das Deckelelement 30 eine Außenfläche 31 auf, die der Betrachter vom Außenbereich 6 erkennen kann. Die Außenfläche 31 kann als Informationsträger dienen. Beispielsweise ist ein Markenzeichen des Kraftfahrzeuges, ein Symbol oder ein Schriftzug auf der Außenfläche 31 anbringbar. Die Außenfläche 31 kann unterschiedliche geometrische Formen annehmen. Im vorliegenden Ausführungsbeispiel gemäß Fig. 1 bis Fig. 3 ist die Außenfläche 31 geradlinig ausgebildet. In einem nicht explizit dargestellten Ausführungsbeispiel kann selbstverständlich die Geometrie der Außenfläche 31 andersartig ausbildet sein, insbesondere kann die Außenfläche 31 in Richtung Außenbereich 6 ausgewölbt sein, insbesondere eine konvexe und/oder konkave Gestalt haben.

Wie in Fig. 1 bis Fig. 3 verdeutlicht ist, weist der Antrieb einen speziellen Mechanismus auf, der dafür sorgt, dass während der Bewegung des Deckelelementes 30 zwischen der Schließstellung 1 und der Offenstellung 2 die Außenfläche 31 in jeder Stellung des Deckelelementes 30 stets im Außenbereich 6 des Kraftfahrzeug sich befindet. Gleichzeitig bedeutet dieser spezielle Mechanismus zur Bewegung des Deckelelementes 30, dass in jeder Stellung des Deckelelementes 30 die Außenfläche 31 stets sichtbar für eine Person ist, die sich im Außenbereich 6 des Kraftfahrzeuges befindet.

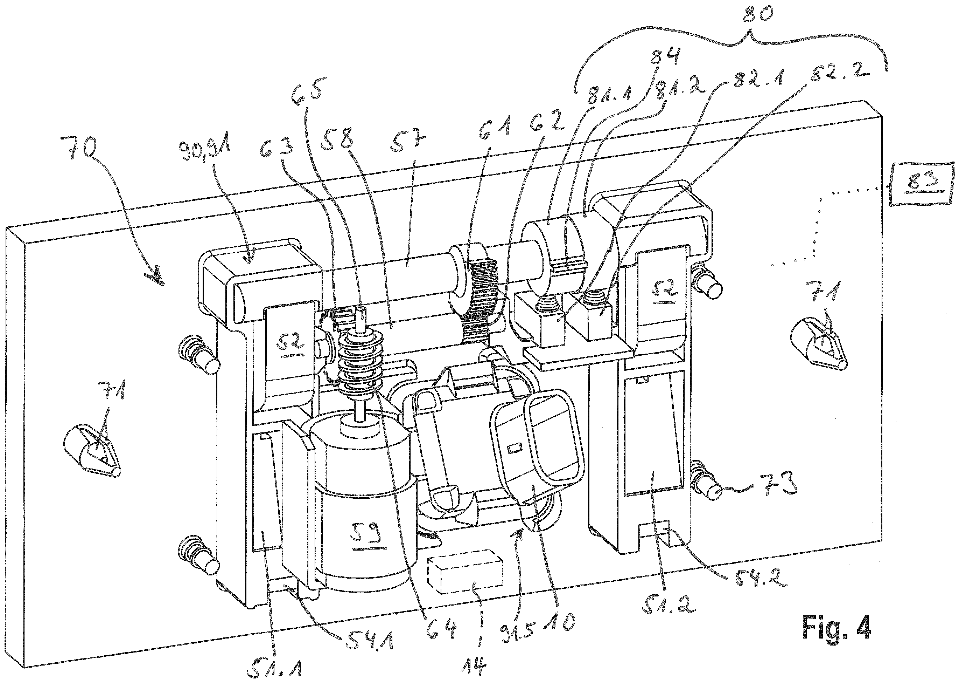

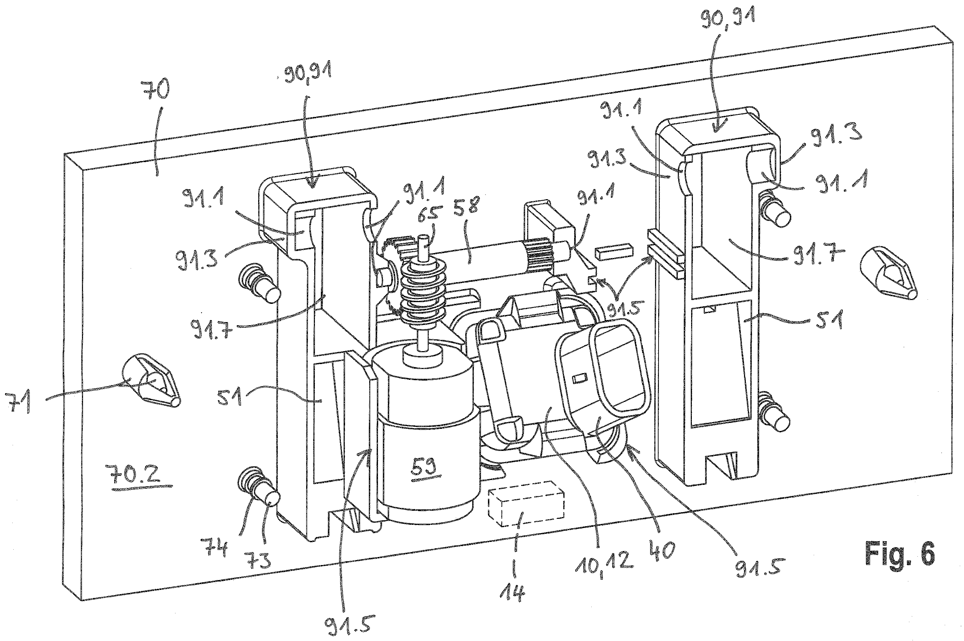

Ferner ist zu erkennen, dass der Mechanismus für die Bewegung des Deckelelementes 30 eine Führungskontur 51 benötigt sowie einen Schwenkarm 52. Im vorliegenden speziellen Ausführungsbeispiel sind zwei Führungskonturen 51.1, 51.2 vorgesehen, die in Fig. 4 und in Fig. 6 rückseitig zu erkennen sind. Ebenfalls sind zwei Schwenkarme 52 im Antrieb 50 vorgesehen, wobei beide Schwenkarme 52 voneinander beabstandet sind, welches in Fig. 4 gezeigt ist. Das Deckelelement 30 weist ferner an seiner Rückseite zwei erste Verbindungselemente 53 sowie zwei zweite Verbindungselemente 54 auf. Das erste Verbindungselement 53 ist jeweils gelenkig um die Achse 55 mit einem Schwenkarm 52 verbunden. Das zweite Verbindungselement 54 ist jeweils an der Führungskontur 51 gelagert. Im vorliegenden Ausführungsbeispiel erstreckt sich die Führungskontur 51.1, 51.2 linearförmig. Während der Antrieb 50 aktiviert ist, verschwenkt sich das Deckelelement 30 um die erste Achse 55, wobei gleichzeitig das Deckelelement 30 an seinem zweiten Verbindungselement 54 entlang der Führungskontur 51.1, 51.2 verfährt. Während das Deckelelement 30 entlang der Führungskontur 51.1, 51.2 entlang gleitet, erfolgt eine gleichzeitige Drehbewegung um die zweite Achse 56, die ebenfalls sich gleichzeitig entlang der Führungskontur 51.1, 51.2 translatorisch verschiebt.

Wie in Fig. 1 bis Fig. 3 zu erkennen ist, ist der Mechanismus derart ausgestaltet, dass während der Bewegung des Deckelelementes 30 von der Schließstellung 1 in die Offenstellung 3 in einer ersten Bewegungsphase 3, die in Fig. 2 gezeigt ist, das Deckelelement 30 sich vom Fahrzeug bzw. von der Karosserie 5 sich entfernt. Gleichzeitig verschwenkt sich das Deckelelement 30 sowohl um die erste Achse 55 als auch um die zweite Achse 56, wobei die zuletzt genannte Achse 56 sich gleichzeitig entlang der Führungskontur 51.1, 51.2 bewegt. In einer zweiten Bewegungsphase 4 wird das Deckelelement 30 zum Fahrzeug herangezogen, wobei das Deckelelement 30 sich gleichzeitig um die beiden Achsen 55, 56 zurückverschwenkt.

Die linearverlaufende Führungskontur 51.2, 51.2 weist einen Winkel β zur Außenkarosserie 5 des Kraftfahrzeuges auf. Dieser Winkel β ist ein spitzer Winkel, wodurch eine kompakte Bauform der erfindungsgemäßen Vorrichtung erzielt wird sowie der Schwenkbereich sowie die Schwenkbewegung des Deckelelementes 30 möglichst nah an der Karosserie 5 erfolgt. Wie die Figuren 1 bis 3 verdeutlichen, ist in der Schließstellung 1 sowie in der Offenstellung 2 die Außenfläche 31 des Deckelelementes 30 im Wesentlichen vertikal zur Fahrzeugkarosserie 5 ausgerichtet. Hierdurch wird die Sichtbarkeit der Außenfläche 31 für eine außenstehende Person im Außenbereich 6 erhöht. Zudem wird eine möglichst nahe Anordnung des Deckelelementes 30 an der Karosserie 5 des Kraftfahrzeuges in jeder Stellung 1, 2 erreicht. In der Offenstellung 2 befindet sich das Deckelelement 30 oberhalb der Kameraeinheit 10, die somit zuverlässig eine Bilderfassung des Außenbereiches 6 durchführen kann. Im vorliegenden Ausführungsbeispiel ist die Kameraeinheit 10 zum Boden (auf dem das Kraftfahrzeug steht) geneigt.

Gemäß den Figuren 1 bis 4 wird ferner gezeigt, dass jeder Schwenkarm 52 an einer ersten Welle 57 angeordnet ist, die über einen Elektromotor 59 angetrieben wird. Ferner ist eine zweite Welle 58 vorgesehen, die parallel zur ersten Welle 57 verläuft. Die erste Welle 57 weist ein erstes Verzahnungselement 61, das auf ein zweites Verzahnungselement 62 der zweiten Welle 58 wirkt. Zudem weist die zweite Welle 58 ein drittes Verzahnungselement 63 auf, das mit einem vierten Verzahnungselement 64 zusammenwirkt. Das vierte Verzahnungselement 64 ist Bestandteil einer dritten Welle 65, insbesondere der Motorwelle des Elektromotors 59. Im vorliegenden Ausführungsbeispiel ist das vierte Verzahnungselement 64 als Spindelelement oder als Schneckenverzahnung ausgebildet. Diese spezielle Ausbildung des Antriebes, insbesondere der ersten Welle 57, zweiten Welle 58, den Verzahnungselementen 61, 62, 63, 64 sowie der dritten Welle 65 dient vorteilhafterweise dazu, dass über den elektrischen Motor 59 ein hohes Drehmoment auf das Deckelelement 30 während seiner Bewegung in die jeweilige Stellung 1, 2 ausgeübt wird. Selbstverständlich kann der Antrieb 50 auch andersartig ausgestaltet sein, insbesondere lediglich eine Welle mit einem elektrischen Motor aufweisen, die für eine entsprechende Bewegung des Deckelelementes 30 sorgt.

Die Schwenkarme 52 sind im vorliegenden Ausführungsbeispiel einstückig mit der ersten Welle 57 verbunden, dass bedeutet, dass die Schwenkarme 52 sowie die erste Welle 57 ein gemeinsames Bauteil bilden. Ferner ist das erste Verzahnungselement 61, welches sich zwischen beiden Schwenkarmen 52 befindet, ebenfalls einstückig mit der ersten Welle 57 verbunden. Das erste Verzahnungselement 61 weist eine spezielle Ausführungsform auf, bei das Verzahnungselement um die Drehachse der ersten Welle 57 verläuft, wobei das Verzahnungselement 61 mit seinen einzelnen Zähnen sich lediglich um einen Viertelkreis um die Achse der ersten Welle 57 erstreckt. Das zweite Verzahnungselement 52 ist ebenfalls einstückig mit der zweiten Welle 58 verbunden. Hierbei weist die zweite Welle 58 einen kleineren Durchmesser auf als die erste Welle 57. Beabstandet zum zweiten Verzahnungselement 62 ist das dritte Verzahnungselement 63 ebenfalls auf der zweiten Welle 58 aufgesetzt.

Wie in sämtlichen Figuren zu erkennen ist, ist ein Montageelement 70 vorgesehen, an dem sämtliche Elemente, wie Kameraeinheit 10, Antrieb 50, einschließlich der ersten Welle 57, zweiten Welle 58, des elektrischen Motors 59 sowie des Deckelelementes 30 getragen werden. Dieses ist besonders in Fig. 4 gezeigt, die das Montageelement 70 rückseitig zeigt, wobei das Montageelement 70 mehrere Befestigungsbereiche 90 aufweist, an denen die oben genannten Elemente, die vom Montageelement 70 getragen werden, befestigt und/oder gelagert sind. Somit kann das Montageelement mit den wesentlichen Elementen, insbesondere der Kameraeinheit, der Bestandteile des Antriebes sowie mit dem Deckelelement 30 vorkonfektioniert werden. Darüber hinaus weist das Montageelement 70 zwei Befestigungsmittel 71 rückseitig auf, wodurch das Montageelement 70 auf einfache Weise außenseitig am Karosserieteil 5 des Kraftfahrzeugs befestigt werden kann. Die erfindungsgemäße Vorrichtung kann somit als vormontierte Montagegruppe vorliegen, die lediglich in einem einzigen Verfahrensschritt von außen auf die Karosserie 5 des Kraftfahrzeuges 5 zu befestigen ist. Hierbei weist die Karosserie 5 entsprechende Gegenbefestigungsmittel auf, die mit dem Befestigungsmittel 71 zusammenwirken. Beispielsweise kann über eine Schraubverbindung, Rastverbindung etc. eine Befestigung des Montageelementes 70 an der Karosserie 5 erzielt werden.

Die genannten Befestigungsbereiche 90 dienen gleichzeitig als Lagerung der ersten Welle 57, der zweiten Welle 58, der dritten Welle 65. Eine Besonderheit der Erfindung ist hierbei, dass die Befesigungsbereiche 90 sowie die Führungskonturen 51.1, 51.2 einstückig mit dem Montageelement 70 verbunden sind. Das Montageelement 70 kann beispielsweise ein Spritzgussteil aus Kunststoff sein.

Wie in Fig. 4 deutlich zu erkennen ist, weist die erfindungsgemäße Vorrichtung eine Positionserfassung 80 auf, die die Schließstellung 1 und die Offenstellung 2 des Deckelelementes 30 erkennt. Hierfür weist die Positionserfassung 80 einen ersten Geber 81.1 und einen zweiten Geber 81.2 auf. Beide Geber 81.1, 81.2 sind an der ersten Welle 57 angeordnet und weisen jeweils einen Nocken 84 auf, der vorsprungartig hervorsteht. Der Geber 81.1, 81.2 bzw. deren Nocken 84 wirken mit jeweils einem Schalter 82.1, 82.2 zusammen. Der erste Geber 81.1 ist hierbei zuständig für die Erkennung der Schließstellung 1. Der Geber 81.2 hingegen ist zuständig für die Erkennung der Offenstellung 2. Die Funktionsweise ist folgende: Wenn der rotierende Nocken 84 des Gebers 81.1 den Schalter 82 aktiviert, insbesondere mechanisch schaltet, wird dieses einer Steuereinheit 83 mitgeteilt, die wiederrum den Antrieb 50, insbesondere den elektrischen Motor 59, deaktiviert. Schaltet der rotierende Nocken 84 des zweiten Gebers 81.2 den dazugehörigen Schalter 82.2, wird dieses der Steuereinheit 83 mitgeteilt bzw. die Steuereinheit 83 erkennt diese Schaltung, die wiederum eine Deaktivierung des Antriebes 50, insbesondere eine Deaktivierung des elektrischen Motors 59 durchführt, wodurch die Offenstellung 2 des Deckelelementes 30 erkannt wird.

Die Steuereinheit 83 kann beispielsweise außerhalb der erfindungsgemäßen Vorrichtung, beispielsweise innerhalb des Kraftfahrzeuges sich befinden, welches in Fig. 4 schematisch gezeigt ist. Alternativ kann die Steuereinheit 83 sich unterhalb der Schalter 82.1, 82.2 befinden, die an entsprechenden Befestigungsbereichen 90 des Montageelementes 70 angeordnet ist.

Alternativ kann die Positionserfassung 80 mit einer Steuereinheit 83 ausgebildet sein, die zeitlich den Antrieb 50 für die Öffnungsbewegung und Schließbewegung des Deckelelementes 30 ansteuert und beispielsweise über die Stromaufnahme des Motors 59 erkennt, wann die Offenstellung 2 und die Schließstellung 1 erreicht ist. Vorzugsweise ist eine entsprechende Software in der Steuereinheit 83 integriert, die eine derartige Stromaufnahmeerkennung durchführt.

In den Fig. 1 bis 4 ist eine Annäherungssensor 14 optional angeordnet, der deshalb gestrichelt dargestellt ist. Dieser kann in oder am Deckelelement 30 oder am Montageelement 70 angeordnet sein. Ferner kann die Kameraeinheit 10 auch durch ein Betätigungselement 12 ersetzt oder ergänzt werden.

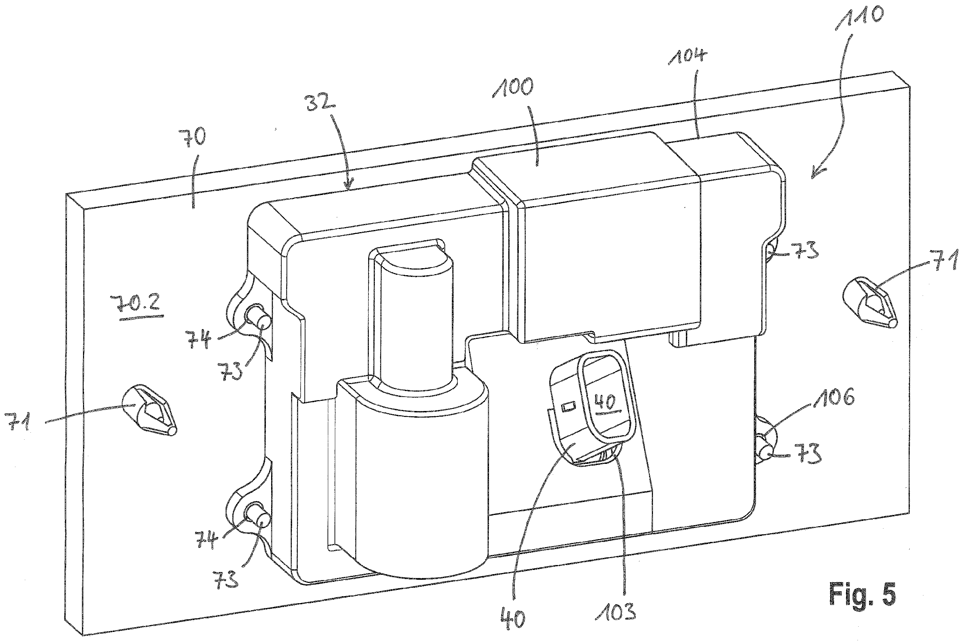

In Figur 5 ist die erfindungsgemäße Vorrichtung von der Rückseite 70.2 des Montageelementes 70 dargestellt. Hierbei ist die Abdeckung 100 mit dem Montageelement 70 zusammengefügt und bildet das Gehäuse 110. Um die Abdeckung 100 sicher an dem Montageelement 70 zu befestigen, sind stiftförmige Halteelemente 73 an dem Montageelement 70 angeordnet, die aus der Rückseite 70.2 herausragen. Die Abdeckung 100 ist im Gegenzug mit Durchbrüchen 106 für die Halteelemente 73 ausgestattet, um die Abdeckung 100 über die Halteelemente 73 zu führen. Damit die Abdeckung 100 sich nicht von den Halteelementen löst, sind Sicherungsring 74 vorgesehen, die form- und/oder kraftschlüssig mit den Halteelementen 73 zusammenwirken und die Abdeckung 100 in ihrer Zusammenbauposition an dem Montageelement halten. Damit das Gehäuse 110 zur Rückseite 70.2 abgedichtet ist, ist eine Dichtung 32 zwischen dem Montageelement 70 und der Abdeckung 100 vorgesehen. Zweckmäßigerweise sitzt diese Dichtung 32 auf einem umlaufenden Rand 104 der Abdeckung 100 und wirkt mit der Rückseite 70.2 des Montageelementes 70 zusammen. Die Rückseite 70.2 ist im Bereich des umlaufenden Randes 104 eben ausgestaltet, so dass eine gute Dichtwirkung erzielt werden kann.

Ferner ist in der Fig. 5 zu erkennen, dass die Abdeckung 100 einen Durchbruch 103 für einen Stecker 40 aufweist, um die Vorrichtung über eine elektrische Leitung anschließen zu können. Für den Durchbruch 103 kann ebenfalls eine Dichtung vorgesehen sein, um die Abdeckung 100 an dieser Stelle abzudichten. Allerdings ist es auch denkbar, dass der von außen zugeführte Stecker, der mit dem Stecker 40 zusammenwirkt, den Durchbruch 103 abdichtet. Somit kann auf eine zusätzliche Dichtung an dieser Stelle verzichtet werden.

Die gesamte Abdeckung 100 kann auch durch gewindeförmige Halteelemente 73 oder spangenförmige Halteelemente 73 oder Clips oder rastförmige Halteelemente 73 mit dem Montageelement 70 fest verbunden werden. In der Fig. 5 kommen insgesamt 4 Halteelemente 73 zum Einsatz, die randseitig an den senkrechten Seitenrändern der Abdeckung 100 angeordnet sind.

Ebenfalls ist der Fig. 5 zu entnehmen, dass die gesamte Vorrichtung über die Befestigungsmittel 71 an der Karosserie 5 des Fahrzeuges befestigt werden kann. Diese Befestigungsmittel 71 sind spreizdübelartig ausgestaltet und wirken mit einer entsprechenden Bohrung in der Karosserie zusammen. Nach dem Durchführen der Befestigungsmittel 71 durch die Bohrungen in der Karosserie 5 wird ein Stift in die Befestigungsmittel 71 eingedrückt, wodurch sich die Befestigungsmittel 71 aufspreizen und die gesamte Vorrichtung form- und/oder kraftschlüssig an der Karosserie 5 halten. Die Montage der Vorrichtung kann hierbei ausschließlich vom Außenbereich 6 des Fahrzeuges 6 stattfinden.

In der Fig. 6 ist die Vorrichtung von der Rückseite 70.2 des Montageelementes 70 dargestellt, wobei die Abdeckung 100 fehlt. Ebenfalls wurde zur Verdeutlichung die erste Welle 57 aus ihren Lagerungen 91 entfernt, damit eine detaillierte Darstellung des entsprechenden Befestigungsbereichs 90 und der Lagerung 91 darstellbar ist. Die zweite Welle 58 ist hingegen in ihrer vergleichbaren Lagerung 91 im Montagelement 71 angeordnet. Die erste Welle 57, die zweite Welle 58 sowie die Motorwelle 65 stellen bewegliche Bauteile im Sinne der erfindungsgemäßen Vorrichtung dar, die durch die Lagerung 91 ortsfest im Gehäuse 110 angeordnet sind. Der Motor 59 sowie die Kameraeinheit 10 bzw. das Betätigungselement 12 sind u. a. als unbewegliche Bauteile an dem Montageelement 70 angeordnet. In der Fig. 6 ist ebenfalls die Steuereinheit 83 entfernt worden, um die Lagerung 91 für die unbewegliche Steuereinheit 83 im Detail darstellen zu können. Ebenfalls ist optional ein Näherungssensor 14 an der Rückseite 70.2 des Montageelementes angeordnet, der vergleichbar zur Positionserfassung 80 über eine Lagerung 91 mit dem Montageelement 70 befestigt werden kann. Der vergleichbarer Annäherungssensor 14 ist den Figuren 1 bis 4 im Deckelelement 30 optional angeordnet, der deshalb nur gestrichelt dargestellt ist.

Nachfolgend soll die Lagerung 91 für ein bewegliches Bauteil 57, 58, 65 näher beschrieben werden. Die erste Welle 57 wird links- und rechtsseitig über die Lagerungen 91 in den Befestigungsbereichen 90 am Montageelement 70 teilweise gelagert. Hierzu sind in dem Montagelement 70 erste Lagerhälften 91.1 eingeformt, die einen halbkreisförmigen Querschnitt aufweisen.

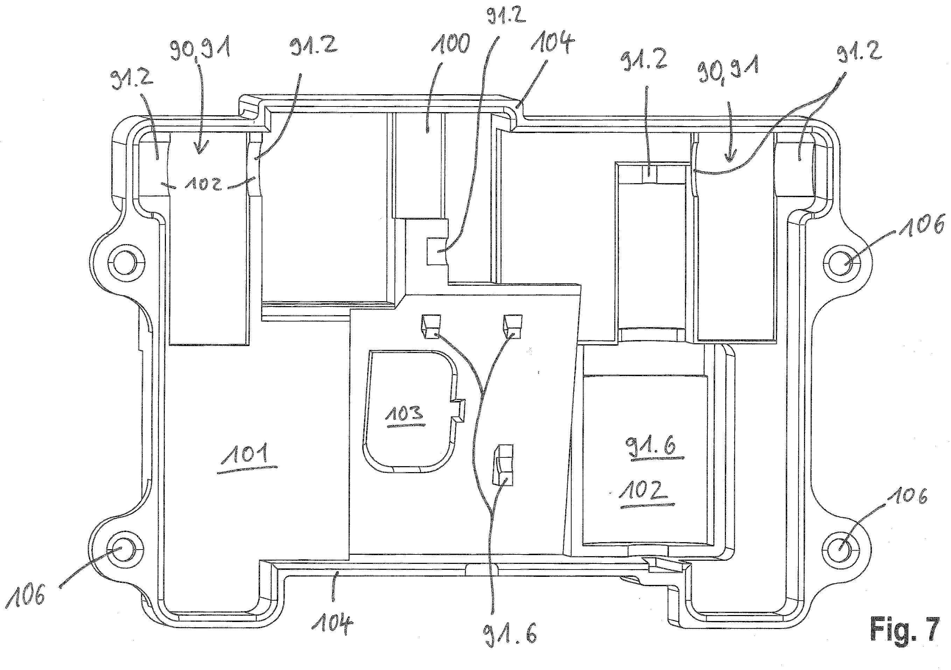

Damit die erste Welle 57 axial in der Lagerung 91 gehalten ist, sind die äußeren Seiten 91.3 der Lagerhälften 91.1 durchgehend ausgestaltet. Hingegen sind die inneren Seiten 91.3 der ersten Lagerhälfte 91.1 offen ausgestaltet, um die erste Welle 57 an diesen Seiten durchführen zu können. Die ersten Lagerhälften 91.1 der Welle 57 weisen einen Freiraum 71.7 auf, der dazu dient, den Schwenkarm 52, der an der Welle 57 befestigt ist, durchführen zu können. Folglich sind die ersten Lagerhälften 91.1 rippenförmig an der Rückseite 70.2 des Montageelementes 70 angeordnet. Die erste Welle 57 wird nur in die ersten Lagerhälften 91.1 eingelegt und durch die zweiten Lagerhälften 91.2, die in der Abdeckung 100 angeordnet sind, beweglich im Gehäuse 110 gelagert. Hierzu braucht nur die Abdeckung 100 auf das Montageelement 70 gesetzt werden. Die zweiten Lagerhälften 91.2 werden in der Figur 7 näher erläutert, die im Wesentlichen geometrisch komplementär zu den ersten Lagerhälften 91.1 im Montageelement 70 ausgestaltet sind. Die ersten Lagerhälften 91.1 und die zweiten Lagerhälften 91.2 sitzen sich direkt gegenüber, um somit die entsprechenden Bauteile sicher lagern zu können, wenn das Gehäuse 110 geschlossen ist.

Aus der Fig. 6 ist ebenfalls zu entnehmen, dass auch die zweite Welle 58 über entsprechende erste Lagerhälften 91.1 an dem Montageelement 70 beweglich angeordnet ist. Hierfür sind die ersten Lagerhälften 91.1 halbzylinderförmig ausgestaltet, um die runden Wellenenden der zweiten Welle 58 drehbar aufzunehmen. Die äußeren Seiten 91.3 sind bei der Lagerung 91 für die zweite Welle 58 ebenfalls geschlossen, um diese axial im Gehäuse 110 zu halten.

Aber auch die unbeweglichen Bauteile, wie z. B. den Motor 59 und die Kameraeinheit 10 bzw. das Betätigungselement 12 oder die Positionserfassung 80 werden über Lagerungen 91 an dem Montageelement 70 gehalten. Hierfür sind an dem Montageelement 70 entsprechende Aufnahmen 91.5 angeordnet, die im Wesentlichen den äußeren Konturen der unbeweglichen Bauteile entsprechen. Die Lagerung 91 für die Positionserfassung 80 wird durch eine Linearführung gebildet, die auch die Aufnahme 91.5 darstellt. Somit wird die Positionserfassung 80 nur in die längliche Aufnahme 91.5 hineingeschoben. Der Motor 59 wird ebenfalls in seine geometrisch komplementär ausgestaltete Aufnahme 91.5 eingelegt genauso wie die entsprechende Kameraeinheit 10 bzw. das Betätigungselement 12 ebenfalls in die komplementär ausgestalteten Aufnahme 91.5 im Montageelement 70. Um auch die unbeweglichen Bauteile ortsfest im Gehäuse 110 zu halten, sind entsprechende Sicherungselemente 91.6 an der Abdeckung 100 angeordnet, die dafür sorgen, dass die unbeweglichen Bauteile in ihrer Aufnahme 91.5 gedrückt werden, wenn die Abdeckung 100 an dem Montageelement 70 montiert sind.

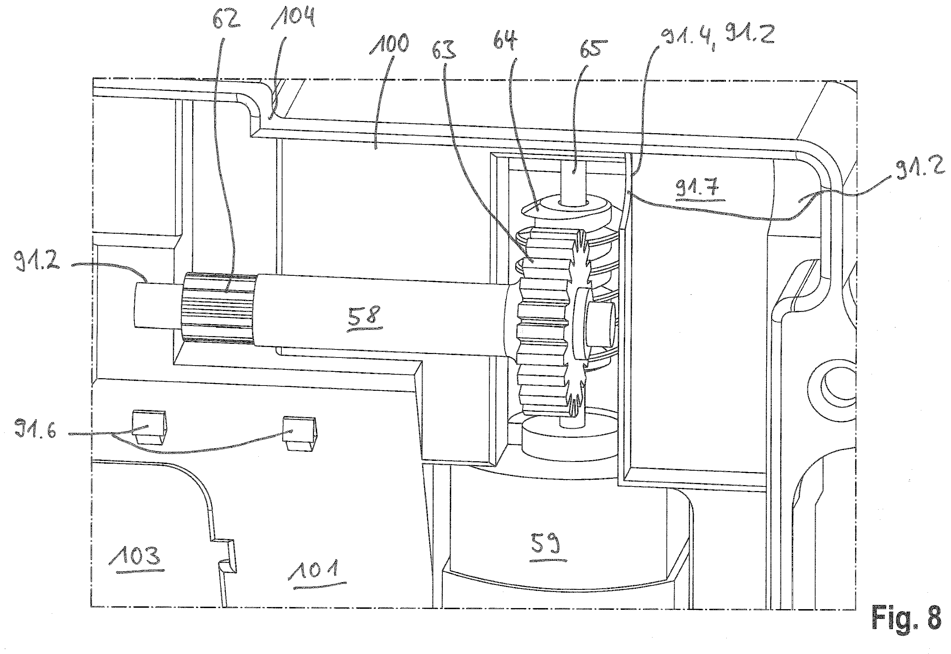

In der Fig. 7 ist nur die Abdeckung 100 von ihrer Innenseite 101 dargestellt. Dabei sind die Konturen 102 zur Befestigung der beweglichen und unbeweglichen Bauteile gut erkennbar, die sich durch die zweiten Lagerhälften 91.2 und Sicherungselemente 91.6 bilden. Die Abdeckung 100 ist im Wesentlichen kastenförmig ausgestaltet, und weist einen umlaufenden Rand 104 auf, der aus der Innenseite 101 herausragt. Die Innenseite 101 ist nicht eben sondern konturreich ausgestaltet, um somit die Bauteile der Vorrichtung in dem Gehäuse 110 ortsfest zu halten. Im oberen linken und rechten Befestigungsbereich 90 der Vorrichtung (aus Sichtweise der Fig. 7) sind gut die zweiten Lagerhälften 91.2 für die erste Welle 57 zu erkennen, die komplementär mit den ersten Lagerhälften 91.1 des Montageelementes 70 zusammenwirken und die gesamte Lagerung 91 für die Welle 57 bilden. Über dem Durchbruch 103 ist ebenfalls die zweite Lagerhälfte 91.2 für die zweite Welle 58 zu erkennen, die halbzylinderförmig in der Innenseite 101 der Abdeckung 101 eingearbeitet ist. Die zweite Welle 58 (aus Sichtweise der Fig. 7) nur linkseitig im Gehäuse 110 gelagert. Die rechtseitige Lagerung der zweiten Welle 58 erfolgt über das vierte Verzahnungselement 64, welches an der Motorwelle 65 des Motors 59 angeordnet ist (s. hierzu Fig. 8). Die Motorwelle 65 ist ebenfalls durch eine zweite Lagerhälfte 91.2 in der Abdeckung 100 gelagert. Auch diese ist im Wesentlichen halbzylinderförmig in der Abdeckung 100 eingearbeitet. Der Motor 59 selbst ist als unbewegliches Bauteil durch die Kontur 102 bzw. das komplementär ausgestaltete Sicherungselement 91.6 in der Lagerung 91 unbeweglich aufgenommen. Die Kameraeinheit 10 bzw. das Betätigungselement 12 wird in die Aufnahme 91.5 des Montageelementes 70 durch die drei Sicherungselemente 91.6 gedrückt, die nocken- oder stegförmig oberhalb bzw. rechtsseitig neben dem Durchbruch 103 an der Innenseite 101 an der Abdeckung 100 angeordnet sind. Diese Sicherungselemente 91.6 können federnd ausgestaltet sein, um die Kameraeinheit 10 bzw. das Betätigungselement 12 in die Aufnahme 91.5 zu pressen. Die Abdeckung 100 sowie das Montageelement 70 können einteilig ausgestaltet sein und als Gussteil oder Spritzgussteil hergestellt sein.

In der Fig. 8 ist zur Verdeutlichung in der Abdeckung 100 die zweite Welle 58 eingezeichnet und wirkt mechanisch mit dem ebenfalls dargestellten Motor 59 zusammen. Wie gut zu erkennen ist, wird die zweite Welle 58 nur linksseitig (aus Sichtweise der Fig. 8) in der Abdeckung 100 durch die zweite Lagerhälfte 91.2 bzw. Lagerung 91 gelagert. Rechtsseitig findet hingegen keine Lagerung der zweiten Welle 58 statt. Allerdings übernimmt die quer zur zweiten Welle 58 verlaufende Motorwelle 65 diese Lagerungsfunktion, da das dritte Verzahnungselement 63 an der zweiten Welle 58 mit dem vierten Verzahnungselement 64 an der Motorwelle 65 zusammenwirkt. Die Verzahnung zwischen der zweiten Welle 58 und der Motorwelle 65 bilden ein Schneckengetriebe, welches selbsthemmend ausgestaltet ist. Durch diese Selbsthemmung kann erreicht werden, dass das Deckelelement 30 automatisch in der Schließstellung 1 oder der Offenstellung 2 sowie jeder Zwischenstellung gehalten ist und nur durch eine Drehung der Motorwelle 65 aus diesen Stellungen bewegt werden kann. Somit kann der Motor 59 bei der Schließstellung 1 oder der Offenstellung 2 ausgeschaltet werden und trotzdem verharrt das Deckelelement 30 in diesen Stellungen. Das obere Ende der Motorwelle 65, welches über das Schneckenrad 64 bzw. das vierte Verzahungselement 64 ragt, ist in der Abdeckung 100 in einer zweiten Lagerhälfte 91.2 angeordnet, so dass diese Welle 65 nicht durch das Zahnrad 63 der zweiten Welle 58 weggedrückt werden kann. In der Ausschnittsvergrößerung der Abdeckung 100 aus der Fig. 8 sind gut die stegförmig ausgestalteten Sicherungselemente 91.6 für die Kameraeinheit 10 bzw. das Betätigungselement 12 oberhalb des Durchbruches 103 dargestellt. Diese sind im vorliegenden Fall federnd ausgestaltet, um somit Maß-/ oder Fertigungstoleranzen oder dergleichen beim Zusammenbauen der Vorrichtung ausgleichen zu können. Außerdem können somit hohe mechanische Spannungen in der Vorrichtung durch einen Zusammenbau des Montageelementes 70 mit der Abdeckung 100 und dem dazwischen angeordneten Bauteilen vermieden werden.

In der Fig. 8 ist auch ein Stück des umlaufenden Randes 104 deutlich sichtbar. Die zweite Lagerhälfte 91.2 für die erste Welle 57 ist rechts oben in der Fig. 8 dargestellt. Dabei wird die zweite Lagerhälfte 91.2 durch den Freiraum 91.7 durchtrennt, so dass links die zweite Lagerhälfte 91.2 durch den rippenförmigen Steg 91.4 gebildet wird.

### Bezugszeichenliste

- 1: Schließstellung
- 2: Offenstellung
- 3: erste Bewegungsphase
- 4: zweite Bewegungsphase
- 5: Karosserie
- 6: Außenbereich des Fahrzeuges

- 10: Kameraeinheit
- 12: Betätigungselement, insbesondere Griff-/ oder Knopfelement
- 14: Annäherungssensor
- 30: Deckelelement
- 31: Außenfläche
- 32: Dichtung
- 40: Stecker / Leitung

- 50: Antrieb
- 51: Führungskontur
- 51.1: erste Führungskontur
- 51.2: zweite Führungskontur
- 52: Schwenkarm
- 53: erstes Verbindungselement
- 53.1: erstes Verbindungselement
- 53.2: erstes Verbindungselement
- 54: zweites Verbindungselement
- 54.1: zweites Verbindungselement
- 54.2: zweites Verbindungselement
- 55: erste Achse
- 56: zweite Achse
- 57: erste Welle

- 58: zweite Welle
- 59: Motor, Elektromotor
- 61: erstes Verzahnungselement
- 62: zweites Verzahnungselement
- 63: drittes Verzahnungselement
- 64: viertes Verzahnungselement
- 65: dritte Welle, Motorwelle

- 70: Montageelement
- 70.1: Vorderseite
- 70.2: Rückseite
- 71: Befestigungsmittel
- 72: Öffnung
- 73: Halteelement (stiftförmig)
- 74: Sicherungsring

- 80: Positionserfassung
- 81: Geber
- 81.1: Geber
- 81.2: Geber
- 82: Sensor, Schalter
- 82.1: Sensor, Schalter
- 82.2: Sensor, Schalter
- 83: Steuereinheit
- 84: Nocken

- 90: Befestigungsbereich
- 91: Lagerung
- 91.1: erste Lagerhälfte für bewegliches Bauteil
- 91.2: zweite Lagerhälfte für bewegliches Bauteil
- 91.3: Seite der Lagerhälfte
- 91.4: rippenförmiger Steg einer Lagerhälfte
- 91.5: Aufnahme für ruhendes Bauteil

- 91.6: Sicherungselement für ruhendes Bauteil
- 91.7: Freiraum

- 100: Abdeckung
- 101: Innenseite
- 102: Kontur
- 103: Durchbruch (für 40)
- 104: umlaufender Rand
- 105: Außenseite
- 106: Durchbruch (für 73)

- 110: Gehäuse

## Patentansprüche

1. Vorrichtung als Montagegruppe, die an einem Karosserieteil (5) eines Kraftfahrzeuges befestigbar ist und ein Montageelement (70) aufweist, an dem folgende Elemente getragen sind:
eine Kameraeinheit (10), die zur Bilderfassung des Außenbereiches (6) eines Kraftfahrzeuges dient,
ein Deckelelement und ein Antrieb (50), der mit dem Deckelelement (30) in Wirkverbindung steht, wobei das Deckelelement (30) durch den Antrieb (50) zwischen einer Schließstellung (1) und einer Offenstellung (2) bewegbar ist, wobei in der Schließstellung (1) des Deckelelementes (30) die Kameraeinheit (10) von außen unzugänglich sich hinter dem Deckelelement (30) befindet und
in der Offenstellung (1) des Deckelelementes (30) die Bilderfassung durchführbar ist,
und das Montageelement (70) zumindest ein Befestigungsmittel (71) aufweist, womit das Montageelement (70) außenseitig am Karosserieteil (5) des Kraftfahrzeuges befestigbar ist, wobei das Deckelelement (30) eine der Kameraeinheit (10) abgewandte Außenfläche (31) aufweist und der Antrieb (50) mit einem derartigen Mechanismus zusammenwirkt, dass während der Bewegung des Deckelelements (30) zwischen der Schließstellung (1) und der Offenstellung (2) die Außenfläche (31) in jeder Stellung des Deckelelementes (30) stets sichtbar für eine Person ist, die sich im Außenbereich (6) des Kraftfahrzeuges befindet.
**dadurch gekennzeichnet,**
**dass** der Mechanismus derart ausgestaltet ist, dass während der Bewegung des Deckelelementes (30) von der Schließstellung (1) in die Offenstellung (2) in einer ersten Bewegungsphase (3) das Deckelelement (30) vom Fahrzeug sich entfernt und gleichzeitig sich um eine Achse (55, 56) verschwenkt und
in einer zweiten Bewegungsphase (4) das Deckelelement (30) zum Fahrzeug herangezogen wird und insbesondere gleichzeitig sich um die Achse (55, 56) zurückverschwenkt.

2. Vorrichtung nach Anspruch 1
**dadurch gekennzeichnet,**
**dass** das Montageelement (70) rückseitig mehrere Befestigungsbereiche (90) aufweist, an denen die Elemente befestigt und/oder gelagert sind.

3. Vorrichtung nach Anspruch 1 oder 2,
**dadurch gekennzeichnet,**
**dass** eine Abdeckung (100) rückseitig am Montageelement (70) angeordnet ist, die im Wesentlichen die Bestandteile des Antriebes (50) und der Kameraeinheit (10) abdeckt und/oder abdichtet.

4. Vorrichtung nach Anspruch 3,
**dadurch gekennzeichnet,**
**dass** die Abdeckung (100) an ihrer dem Montageelement (70) zugewandten Innenseite (101) eine Kontur (102) aufweist, die als Lagerung für die Elemente dient.

5. Vorrichtung nach einem der vorhergehenden Ansprüchen,
**dadurch gekennzeichnet,**
**dass** der Mechanismus zumindest eine Führungskontur (51.1, 51.2) und zumindest einen Schwenkarm (52) aufweist, wobei das Deckelelement (30) rückseitig an der Führungskontur (51.1, 51.2) und am Schwenkarm (52) befestigt ist, wobei insbesondere das Deckelelement (30) rückseitig ein erstes Verbindungselement (53.1, 53.2) und/oder ein zweites Verbindungselement (54.1, 54.2) aufweist, wobei das Verbindungselement (53, 54) bewegbar gelagert an der Führungskontur (51.1, 51.2) und/oder dem Schwenkarm (52) ist.

6. Vorrichtung nach Anspruch 5,
**dadurch gekennzeichnet,**
**dass** die Führungskontur (51.1, 51.2) linearförmig und/oder zumindest bereichsweise bogenförmig ist.

7. Vorrichtung nach Anspruch 6,
**dadurch gekennzeichnet,**
**dass** die linear verlaufende Führungskontur (51.1, 51.2) einen Winkel β zur Außenkarosserie (5) des Kraftfahrzeuges aufweist, an der die Vorrichtung angebracht ist, wobei der Winkel β zwischen 1° ≤ β ≤ 45°, insbesondere zwischen 10° ≤ β ≤ 35° liegt.

8. Vorrichtung nach einem der vorhergehenden Ansprüche,
**dadurch gekennzeichnet,**
**dass** sowohl in der Schließstellung (1) als auch in der Offenstellung (2) die Außenfläche (31) des Deckelelements (30) im wesentlichen vertikal zur Fahrzeugkarosserie (5) ausgerichtet ist.

9. Vorrichtung nach einem der Ansprüche 5-7,
**dadurch gekennzeichnet,**
**dass** der Schwenkarm (52) an einer ersten Welle (57) angeordnet ist, die über einen Elektromotor (59) antreibbar ist, insbesondere der Schwenkarm (52) mit der ersten Welle (57) ein gemeinsames Bauteil bilden.

10. Vorrichtung nach einem der Ansprüche 5-7 oder 9,
**dadurch gekennzeichnet,**
**dass** der Schwenkarm (52) L-förmig ausgeführt ist.

11. Vorrichtung nach Anspruch 9,
**dadurch gekennzeichnet,**
**dass** das Montageelement (70) eine erste (51.1) und eine zweite Führungskontur (51.2) aufweist, in der jeweils ein zweites Verbindungselement (54.1, 54.2) bewegbar gelagert ist, wobei die Kameraeinheit (10) und der Elektromotor (59) zwischen der ersten (51.1) und der zweiten Führungskontur (51.2) angeordnet sind.

12. Verfahren zur Befestigung einer Vorrichtung an einem Karosserieteil (5) eines Kraftfahrzeuges, wobei die Vorrichtung ein Montageelement (70) aufweist, das folgende Elemente trägt:
eine Kameraeinheit (10), die zur Bilderfassung des Außenbereiches eines Kraftfahrzeuges dient,
ein Antrieb (50), der mit einem Deckelelement (30) in Wirkverbindung steht, wobei das Deckelelement (30) durch den Antrieb (50) zwischen einer Schließstellung (1) und einer Offenstellung (2) bewegbar ist, wobei
in der Schließstellung (1) des Deckelelementes (30) die Kameraeinheit (10) von außen unzugänglich sich hinter dem Deckelelement (30) befindet und
in der Offenstellung (1) des Deckelelementes (30) die Bilderfassung durchführbar ist,
und das Montageelement (70) zumindest ein Befestigungsmittel (71) aufweist, wobei das Verfahren umfasst, dass die Vorrichtung mit dem Befestigungsmittel von Außen (6) an dem Karosserieteil (5) des Kraftfahrzeuges befestigt wird, wobei das Deckelelement (30) eine der Kameraeinheit (10) abgewandte Außenfläche (31) aufweist und der Antrieb (50) mit einem derartigen Mechanismus zusammenwirkt, dass während der Bewegung des Deckelelements (30) zwischen der Schließstellung (1) und der Offenstellung (2) die Außenfläche (31) in jeder Stellung des Deckelelementes (30) stets sichtbar für eine Person ist, die sich im Außenbereich (6) des Kraftfahrzeuges befindet.
**dadurch gekennzeichnet,**
**dass** der Mechanismus derart ausgestaltet ist, dass während der Bewegung des Deckelelementes (30) von der Schließstellung (1) in die Offenstellung (2) in einer ersten Bewegungsphase (3) das Deckelelement (30) vom Fahrzeug sich entfernt und gleichzeitig sich um zumindest eine Achse (55, 56) verschwenkt und
in einer zweiten Bewegungsphase (4) das Deckelelement (30) zum Fahrzeug herangezogen wird und insbesondere gleichzeitig sich um zumindest ein Achse (55, 56) zurückverschwenkt.

13. Verfahren nach Anspruch 12,
**dadurch gekennzeichnet,**
**dass** die Vorrichtung über eine Rastverbindung am Karosserieteil (5) befestigt wird.

14. Verfahren nach Anspruch 12 oder 13,
**dadurch gekennzeichnet,**
**dass** das Montageelement (70) rückseitig mehrere Befestigungsbereiche (90) aufweist, an denen die Elemente, der Antrieb (50) und/oder die Kameraeinheit (10) befestigt und/oder gelagert sind.

15. Verfahren nach einem der Ansprüche 12-14,
**dadurch gekennzeichnet,**
**dass** eine Abdeckung (100) rückseitig am Montageelement (70) angeordnet ist, die im Wesentlichen die Bestandteile des Antriebes (50) und der Kameraeinheit (10) abdeckt und/oder abdichtet.

16. Verfahren nach Anspruch 15,
**dadurch gekennzeichnet,**
**dass** die Abdeckung (100) an ihrer dem Montageelement (70) zugewandten Innenseite (101) eine Kontur (102) aufweist, die als Lagerung für die Elemente dient.

17. Verfahren nach einem der Ansprüche 12-16,
**dadurch gekennzeichnet,**
**dass** der Mechanismus zumindest eine Führungskontur (51.1, 51.2) und zumindest einen Schwenkarm (52) aufweist, wobei das Deckelelement (30) rückseitig an der Führungskontur (51.1, 51.2) und am Schwenkarm (52) befestigt ist, wobei insbesondere das Deckelelement (30) rückseitig ein erstes Verbindungselement (53) und/oder ein zweites Verbindungselement (54) aufweist, wobei zumindest ein Verbindungselement (53, 54) bewegbar gelagert an der Führungskontur (51.1, 51.2) und/oder dem Schwenkarm (52) ist.

18. Verfahren nach Anspruch 17,
**dadurch gekennzeichnet,**
**dass** die Führungskontur (51.1, 51.2) linearförmig und/oder zumindest bereichsweise bogenförmig ist.

19. Verfahren nach Anspruch 18,
**dadurch gekennzeichnet,**
**dass** die linear verlaufende Führungskontur (51.1, 51.2) einen Winkel β zur Außenkarosserie (5) des Kraftfahrzeuges aufweist, an der die Vorrichtung angebracht ist, wobei der Winkel β zwischen 1° ≤ β ≤ 45°, insbesondere zwischen 10° ≤ β ≤ 35° liegt.

20. Verfahren nach einem der Ansprüche 12-19,
**dadurch gekennzeichnet,**
**dass** sowohl in der Schließstellung (1) als auch in der Offenstellung (2) die Außenfläche (31) des Deckelelements (30) im Wesentlichen vertikal zur Fahrzeugkarosserie (5) ausgerichtet ist.

21. Verfahren nach einem der Ansprüche 17-19,
**dadurch gekennzeichnet,**
**dass** der Schwenkarm (52) an einer ersten Welle (57) angeordnet ist, die über einen Elektromotor (59) antreibbar ist, insbesondere der Schwenkarm (52) mit der ersten Welle (57) ein gemeinsames Bauteil bilden.

22. Verfahren nach einem der Ansprüche 17-19 oder 21,
**dadurch gekennzeichnet,**
**dass** der Schwenkarm (52) L-förmig ausgeführt ist.

23. Verfahren nach Anspruch 21,
**dadurch gekennzeichnet,**
**dass** das Montageelement (70) eine erste (51.1) und eine zweite Führungskontur (51.2) aufweist, in der jeweils ein zweites Verbindungselement (54.1, 54.2) bewegbar gelagert ist, wobei die Kameraeinheit (10) und der Elektromotor (59) zwischen der ersten (51.1) und der zweiten Führungskontur (51.2) angeordnet sind.

24. Vorrichtung nach einem der Ansprüche 1 bis 11, welche nach einem Verfahren nach einem der Ansprüche 12 bis 23 montierbar ist.

## Claims

1. Device as assembly unit that is attachable to a body part (5) of a motor vehicle and comprising an assembly element (60) on which the following elements are carried:
a camera unit (10) that serves for recording images of the exterior area (6) of a motor vehicle,
a cover element and a drive (50) which is in an operative connection with the cover element (30) wherein the cover element (30) is movable between the closed position (1) and the opened position (2) by the drive (50), wherein in the closed position (1) of the cover element (30) the camera unit (10) is inaccessible from the outside behind the cover element (30) and in the opened position (2) of the cover element (30) the image acquisition is performable, and that the assembly element (70) comprises at least one attachment means (71) with which the assembly element (70) is attachable on the outside of the body part (5) of the motor vehicle, wherein the cover element (30) comprises an outer surface (31) facing away from the camera unit (10) and the drive (50) interacts with a mechanism such that during the movement of the cover element (30) between the closed position (1) and the opened position (2) the outer surface (31) is in each position always visible for a person which is in the outer exterior area (6) of the motor vehicle
**characterized in that**
the mechanism is designed in such that during the movement of the cover element (30) from the closed position (1) to the opened position (2) in a first movement phase (3) the cover element (30) moves away from the motor vehicle and simultaneously swivels around at least one axis (55, 56) and that in a second movement phase (4) the cover element (30) is pulled towards the motor vehicle and particularly simultaneously swivels back around at least one axis (55, 56).

2. Device according to claim 1
**characterized in that**
on the rear side the assembly element (70) comprises several attachment areas (90) on which elements are attached and/or supported.

3. Device according to claim 1 and 2
**characterized in that**
a cover (100) is arranged on the rear side of the assembly unit (70) that essentially covers and/or seals the components of the drive (50) and the camera unit (10).

4. Device according to claim 3
**characterized in that**
the cover (100) comprises a contour (102) on its inner surface (101) facing the assembly element (70) that serves as support for the elements.

5. Device according to one of the preceding claims
**characterized in that**
the mechanism comprises at least one guide contour (51.1, 51.2) and at least one swivel arm (52) wherein the cover element (30) being attached with its rear on the guide contour (51.1, 51.2) and on the swivel arm (52), wherein particularly the cover element (30) comprises on its rear side a first connection element (53.1, 53.2) and/or a second connection element (54.1, 54.2) wherein the connection element (53, 54) being movably supported on the guide contour (51.1, 51.2) and/or the swivel arm (52).

6. Device according to claim 5
**characterized in that**
the guide contour (51.1, 51.2) is linear and/or arc shaped, at least in sections.

7. Device according to claim 6
**characterized in that**
the guide contour (51.1, 51.2) with a linear shape forms an angle β with the outer body (5) of the motor vehicle to which the device is attached wherein the angle β being between 1° ≤ β ≤ 45°, particularly between 10° ≤ β ≤ 35°.

8. Device according to one of the preceding claims
**characterized in that**
in the closed position (1) and in the opened position (2) the outer surface (31) of the cover element (30) is aligned essentially vertically in relation to the motor vehicle body (5).

9. Device according to one of claims 5 to 7
**characterized in that**
the swivel arm (52) is arranged on a first shaft (57) that can be driven by an electric motor (59),particularly the swivel arm (52) forms a common component with the first shaft (57).

10. Device according to one of claims 5 to 7 or 9
**characterized in that**
the swivel arm (52) is configured L-shaped.

11. Device according to claim 9
**characterized in that**
the assembly element (70) comprises a first (51.1) and a second contour (51.2) in each of which a second connection element (54.1, 54.2) is movably supported, wherein a camera unit (10) and the electric motor (59) are arranged between the first (51.1) and a second guide contour (51.2).

12. Method for attaching a device on a body part (5) of a motor vehicle, wherein the device comprises an assembly element (70) that carries the following elements:
a camera unit (10) that serves for recording images of the exterior area of the motor vehicle, a drive (50) being in operative connection with the cover element (30) wherein the cover element (30) being movable by means of the drive (50) between a closed position (1) and an opened position (2), wherein in the closed position (1) of the cover element (30) the camera element (10) is inaccessible from the outside behind the cover element (30) and in the opened position (1) of the cover element (30) the image acquisition is performable and that the assembly element (70) comprises at least one attachment means (71) wherein the method comprises that the device with the attachment means is assembled at the body part (5) of the motor vehicle from the outside (6), wherein the cover element (30) has an outer surface (31) facing away from the camera unit (10) and that the drive (50) interacts with the mechanism such that during the movement of the cover element (30) between the closed position (1) and the opened position (2) the outer surface (31) is in each position visible for a person being in the exterior area (6) of the motor vehicle **characterized in that**
the mechanism is configured such that during the movement of the cover element (30) from the closed position (1) into the opened position (2) in a first movement phase (3) the cover element (30) moves away from the motor vehicle and simultaneously swivels around at least one axis (55, 56) and in a second movement phase (4) the cover element (30) is pulled towards the motor vehicle and particularly simultaneously swivels back around at least one axis (55, 56).

13. Method according to claim 12
**characterized in that**
the device is assembled at the body part (5) via a locking connection.

14. Method according to claim 12 or 13
**characterized in that**
on its rear side the assembly element (70) comprises several attachment areas (90) on which the elements, the drive (50) and/or the camera unit (10) are attached and/or supported.

15. Method according to claim 12 to 14
**characterized in that**
a cover (100) is arranged on the rear side of the assembly element (70) that essentially covers and/or seals the component of the drive (50) and the camera unit (10).

16. Method according to claim 15
**characterized in that**
the cover (100) comprises a contour (102) on the inner surface (101) facing the assembly element (70) that serves as support for the elements.

17. Method according to one of claims 12 to 16
**characterized in that**
the mechanism comprises at least one guide contour (51.1, 51.2) and at least one swivel arm (52), wherein the cover element (30) being attached with its rear on the guide contour (51.1, 51.2) and on the swivel arm (52), wherein specifically the cover element (30) comprises on its rear side a first connection element (53) and/or a second connection element (54), wherein the connection element (53, 54) being movably supported on the guide contour (51.1, 51.2) and/or the swivel arm (52).

18. Method according to claim 17
**characterized in that**
the guide contour (51.1, 51.2) is linear and/or arc shaped, at least in sections.

19. Method according to claim 18
**characterized in that**
the linear shaped guide contour (51.1, 51.2) has an angle β with the outer body (5) of the motor vehicle to which the device is attached with the angle β being between 1° ≤ β ≤ 45°, particularly between 10° ≤ β ≤ 35°.

20. Method according to one of claims 12 to 19
**characterized in that**
in the closed position (1) and in the opened position (2) the outer surface (31) of the cover element (30) is aligned essentially vertically in relation to the motor vehicle body (5).

21. Method according to one of claims 17 to 19
**characterized in that**
the swivel arm (52) is arranged on a first shaft (57) that can be driven by an electric motor (59), particularly that the swivel arm (52) forms a common component with the first shaft (57).

22. Method according to one of claims 17 to 19 or 21
**characterized in that**
the swivel arm (52) is configured L-like.

23. Method according to claim 21
**characterized in that**
the mounting element (70) comprises a first (51.1) and a second guide contour (51.2) in each of which a second connection element (54.1, 54.2) is movably supported, wherein the camera unit (10) and the electric motor (59) are arranged between the first (51.1) and the second guide contour (51.2).

24. Device according to one of claims 1 to 11 which is mountable with a method according to one of claims 12 to 23.

## Revendications

1. Dispositif remplissant la fonction d'un groupe de montage qui peut être fixé à une partie (5) de la carrosserie d'un véhicule automobile, et présente un élément de montage (70) procurant un support aux éléments suivants :
une unité (10) à caméra, servant à capturer des images de la région extérieure (6) d'un véhicule automobile,
un élément formant couvercle, et un entraînement (50) en liaison opérante avec ledit élément (30) formant couvercle, lequel élément (30) formant couvercle peut être mû, par l'intermédiaire dudit entraînement (50), entre une position de fermeture (1) et une position d'ouverture (2), sachant
que, dans ladite position de fermeture (1) de l'élément (30) formant couvercle, l'unité (10) à caméra se trouve derrière ledit élément (30) formant couvercle, en étant inaccessible depuis l'extérieur,
que la capture d'images peut être effectuée dans ladite position d'ouverture (2) dudit élément (30) formant couvercle,
et que l'élément de montage (70) est pourvu d'au moins un moyen de fixation (71) par lequel ledit élément de montage (70) peut être fixé extérieurement à la partie (5) de la carrosserie du véhicule automobile, l'élément (30) formant couvercle étant muni d'une surface extérieure (31) tournée à l'opposé de l'unité (10) à caméra, et l'entraînement (50) coopérant avec un mécanisme d'un type tel que, lors du mouvement dudit élément (30) formant couvercle, entre la position de fermeture (1) et la position d'ouverture (2), ladite surface extérieure (31) soit en permanence visible, dans chaque position dudit élément (30) formant couvercle, par une personne située dans la région extérieure (6) dudit véhicule automobile,
**caractérisé par le fait**
**que** le mécanisme est d'une conception telle que, lorsque l'élément (30) formant couvercle se meut de la position de fermeture (1) à la position d'ouverture (2),
durant une première phase (3) du mouvement, ledit élément (30) formant couvercle s'éloigne du véhicule et pivote simultanément autour d'un axe (55, 56) et,
durant une seconde phase (4) dudit mouvement, ledit élément (30) formant couvercle est rapproché dudit véhicule et effectue simultanément, en particulier, un pivotement rétrograde autour dudit axe (55,56).

2. Dispositif selon la revendication 1,
**caractérisé par le fait**
**que** l'élément de montage (70) compte, à la face postérieure, plusieurs zones de fixation (90) auxquelles les éléments sont fixés et/ou dans lesquelles ils sont montés.

3. Dispositif selon la revendication 1 ou 2,
**caractérisé par le fait**
**qu'**un cache (100), implanté à la face postérieure de l'élément de montage (70), assure pour l'essentiel le recouvrement et/ou l'étanchement des pièces constitutives de l'entraînement (50) et de l'unité (10) à caméra.

4. Dispositif selon la revendication 3,
**caractérisé par le fait**
**que** le cache (100) est muni, à sa face intérieure (101) tournée vers l'élément de montage (70), d'un profil (102) servant de partie de montage affectée aux éléments.

5. Dispositif selon l'une des revendications précédentes,
**caractérisé par le fait**
**que** le mécanisme est doté d'au moins un profil de guidage (51.1, 51.2) et d'au moins un bras pivotant (52), l'élément (30) formant couvercle étant fixé audit profil de guidage (51.1, 51.2) et audit bras pivotant (52), à la face postérieure, sachant notamment que ledit élément (30), formant couvercle, comporte un premier élément de liaison (53.1, 53.2) et/ou un second élément de liaison (54.1, 54.2), à la face postérieure, l'élément de liaison (53, 54) étant monté sur ledit profil de guidage (51.1, 51.2) et/ou sur ledit bras pivotant (52), avec faculté de mouvement.

6. Dispositif selon la revendication 5,
**caractérisé par le fait**
**que** le profil de guidage (51.1, 51.2) présente une configuration rectiligne, et/ou curviligne au moins par zones.

7. Dispositif selon la revendication 6,
**caractérisé par le fait**
**que** le profil de guidage (51.1, 51.2), à tracé rectiligne, décrit un angle β par rapport à la carrosserie extérieure (5) du véhicule automobile sur laquelle ledit dispositif est implanté, ledit angle β mesurant entre 1° ≤ β ≤ 45°, notamment entre 10° ≤ β ≤ 35°.

8. Dispositif selon l'une des revendications précédentes,
**caractérisé par le fait**
**que** la surface extérieure (31) de l'élément (30) formant couvercle est orientée, pour l'essentiel, verticalement par rapport à la carrosserie (5) du véhicule, tant dans la position de fermeture (1) que dans la position d'ouverture (2).

9. Dispositif selon l'une des revendications 5-7,
**caractérisé par le fait**
**que** le bras pivotant (52) est installé sur un premier arbre (57) pouvant être entraîné par un moteur électrique (59), ledit bras pivotant (52) et ledit premier arbre (57) formant associativement, en particulier, une pièce structurelle commune.

10. Dispositif selon l'une des revendications 5-7 ou 9,
**caractérisé par le fait**
**que** le bras pivotant (52) est réalisé avec configuration en L.

11. Dispositif selon la revendication 9,
**caractérisé par le fait**
**que** l'élément de montage (70) comprend des premier (51.1) et second (51.2) profils de guidage dans lesquels, à chaque fois, un second élément de liaison (54.1, 54.2) est monté avec faculté de mouvement, l'unité (10) à caméra, et le moteur électrique (59), étant interposés entre lesdits premier (51.1) et second (51.2) profils de guidage.

12. Procédé dévolu à la fixation d'un dispositif à une partie (5) de la carrosserie d'un véhicule automobile, ledit dispositif présentant un élément de montage (70) procurant un support aux éléments suivants :
une unité (10) à caméra, servant à capturer des images de la région extérieure d'un véhicule automobile,
un entraînement (50) en liaison opérante avec un élément (30) formant couvercle, lequel élément (30) formant couvercle peut être mû, par l'intermédiaire dudit entraînement (50), entre une position de fermeture (1) et une position d'ouverture (2), sachant
que, dans ladite position de fermeture (1) de l'élément (30) formant couvercle, l'unité (10) à caméra se trouve derrière ledit élément (30) formant couvercle, en étant inaccessible depuis l'extérieur,
que la capture d'images peut être effectuée dans ladite position d'ouverture (2) dudit élément (30) formant couvercle,
et que l'élément de montage (70) est pourvu d'au moins un moyen de fixation (71), le procédé incluant la fixation du dispositif à la partie de la carrosserie (5) du véhicule automobile, depuis l'extérieur (6), à l'aide dudit moyen de fixation, sachant que l'élément (30) formant couvercle est muni d'une surface extérieure (31) tournée à l'opposé de l'unité (10) à caméra, et que l'entraînement (50) coopère avec un mécanisme d'un type tel que, lors du mouvement dudit élément (30) formant couvercle, entre la position de fermeture (1) et la position d'ouverture (2), ladite surface extérieure (31) soit en permanence visible, dans chaque position dudit élément (30) formant couvercle, par une personne située dans la région extérieure (6) dudit véhicule automobile,
**caractérisé par le fait**
**que** le mécanisme est d'une conception telle que, lorsque l'élément (30) formant couvercle se meut de la position de fermeture (1) à la position d'ouverture (2),
durant une première phase (3) du mouvement, ledit élément (30) formant couvercle s'éloigne du véhicule et pivote simultanément autour d'au moins un axe (55, 56) et,
durant une seconde phase (4) dudit mouvement, ledit élément (30) formant couvercle est rapproché dudit véhicule et effectue simultanément, en particulier, un pivotement rétrograde autour d'au moins un axe (55, 56).

13. Procédé selon la revendication 12,
**caractérisé par le fait**
**que** le dispositif est fixé à la partie (5) de la carrosserie par l'intermédiaire d'une liaison à déclic.

14. Procédé selon la revendication 12 ou 13,
**caractérisé par le fait**
**que** l'élément de montage (70) compte, à la face postérieure, plusieurs zones de fixation (90) auxquelles les éléments, l'entraînement (50) et/ou l'unité (10) à caméra sont fixés, et/ou dans lesquelles ils sont montés.

15. Procédé selon l'une des revendications 12-14,
**caractérisé par le fait**
**qu'**un cache (100), implanté à la face postérieure du l'élément de montage (70), assure pour l'essentiel le recouvrement et/ou l'étanchement des pièces constitutives de l'entraînement (50) et de l'unité (10) à caméra.

16. Procédé selon la revendication 15,
**caractérisé par le fait**
**que** le cache (100) est muni, à sa face intérieure (101) tournée vers l'élément de montage (70), d'un profil (102) servant de partie de montage affectée aux éléments.

17. Procédé selon l'une des revendications 12-16,
**caractérisé par le fait**
**que** le mécanisme est doté d'au moins un profil de guidage (51.1, 51.2) et d'au moins un bras pivotant (52), l'élément (30) formant couvercle étant fixé audit profil de guidage (51.1, 51.2) et audit bras pivotant (52), à la face postérieure, sachant notamment que ledit élément (30), formant couvercle, comporte un premier élément de liaison (53) et/ou un second élément de liaison (54), à la face postérieure, au moins un élément de liaison (53, 54) étant monté sur ledit profil de guidage (51.1, 51.2) et/ou sur ledit bras pivotant (52), avec faculté de mouvement.

18. Procédé selon la revendication 17,
**caractérisé par le fait**
**que** le profil de guidage (51.1, 51.2) présente une configuration rectiligne, et/ou curviligne au moins par zones.

19. Procédé selon la revendication 18,
**caractérisé par le fait**
**que** le profil de guidage (51.1, 51.2), à tracé rectiligne, décrit un angle (3 par rapport à la carrosserie extérieure (5) du véhicule automobile sur laquelle le dispositif est implanté, ledit angle Xi mesurant entre 1° < ₀ < 45°, notamment entre 10° ≤ β ≤ 35°.

20. Procédé selon l'une des revendications 12-19,
**caractérisé par le fait**
**que** la surface extérieure (31) de l'élément (30) formant couvercle est orientée, pour l'essentiel, verticalement par rapport à la carrosserie (5) du véhicule, tant dans la position de fermeture (1) que dans la position d'ouverture (2).

21. Procédé selon l'une des revendications 17-19,
**caractérisé par le fait**
**que** le bras pivotant (52) est installé sur un premier arbre (57) pouvant être entraîné par un moteur électrique (59), ledit bras pivotant (52) et ledit premier arbre (57) formant associativement, en particulier, une pièce structurelle commune.

22. Procédé selon l'une des revendications 17-19 ou 21,
**caractérisé par le fait**
**que** le bras pivotant (52) est réalisé avec configuration en L.

23. Procédé selon la revendication 21,
**caractérisé par le fait**
**que** l'élément de montage (70) comprend des premier (51.1) et second (51.2) profils de guidage dans lesquels, à chaque fois, un second élément de liaison (54.1, 54.2) est monté avec faculté de mouvement, l'unité (10) à caméra, et le moteur électrique (59), étant interposés entre lesdits premier (51.1) et second (51.2) profils de guidage.

24. Dispositif selon l'une des revendications 1 à 11, pouvant être monté suivant un procédé conforme à l'une des revendications 12 à 23.
